# EUROPEAN PATENT SPECIFICATION

(11) **EP 3 341 925 B1**
(45) Date of publication and mention of the grant of the patent: **13.09.2023**
(21) Application number: 16760034.5
(22) Date of filing: 29.08.2016
(51) Int. Cl.: G08G 5/00, G08G 5/04, G05D 1/10, G01C 21/20, G01S 13/93, G01S 17/93

(54) **A HIGHLY AUTOMATED SYSTEM OF AIR TRAFFIC CONTROL (ATM) FOR AT LEAST ONE UNMANNED AERIAL VEHICLE (UNMANNED AERIAL VEHICLES UAV)**
HOCHAUTOMATISIERTES SYSTEM FÜR FLUGVERKEHRSKONTROLLE (ATM) FÜR MINDESTENS EIN UNBEMANNTES LUFTFAHRZEUG (UNBEMANNTE LUFTFAHRZEUGE UAV)
SYSTÈME HAUTEMENT AUTOMATISÉ DE CONTRÔLE DE LA CIRCULATION AÉRIENNE (ATM) POUR AU MOINS UN VÉHICULE AÉRIEN SANS PILOTE (VÉHICULES AÉRIENS SANS PILOTE UAV)

(30) Priority: 27.08.2015 IT UB20153269; 27.08.2015 EP 15182778
(43) Date of publication of application: 04.07.2018
(73) Proprietor: Dronsystems Limited, London WC2H 9JQ (GB)
(72) Inventor: TANTARDINI, Marco, 26100 Cremona (IT); SHOMKO, Dennis A., Sevenoaks Kent TN15 7JU (GB)
(74) Representative: Locas, Davide
(86) International application number: PCT/EP2016/070341
(87) International publication number: WO 2017/032906

(56) References cited:
- EP-A1- 2 853 974
- EP-A2- 2 597 633
- EP-A2- 2 749 984
- WO-A1-2014/111842
- FR-A1- 3 014 233
- US-A1- 2009 125 221
- US-A1- 2009 210 109
- US-A1- 2009 219 393
- US-A1- 2013 261 949
- US-B1- 8 314 730
- US-B1- 8 862 381

## Description

### Technical field

The present invention relates generally to Air Traffic Management (ATM) and Air Traffic Control (ATC), and more specifically to systems, methods and devices for automated Air Traffic Management for Unmanned Aerial Vehicles (UAVs).

### Technological background

It is expected that the market for small UAVs (sUAVs) flying at low altitudes will grow exponentially. There are many UAV producers in the market, each of them providing a product that is composed of the UAV and the Ground Control Station (GCS). The GCS acts both as a flight plan planner and as a local ATC for that UAV when it is airborne, monitoring the flight evolution and the UAV status. However each GCS is a closed ATC system, not allowing other operators with their own GCS and UAV airborne to see each other and coordinate them under one ATC, nor giving FAA and General Aviation (GA) pilots access to it. The UAV tends to be blind respect to GA, and GA tends to be blind respect to UAVs nearby. DronNav is an architecture composted of hardware and software in order to create this infrastructure that does not exist yet and that is highly needed. EP 2 749 984 A2 discloses an unmanned vehicle management system including an unmanned aircraft system (UAS) control station controlling one or more unmanned vehicles (UV), a collaborative routing system, and a communication network connecting the UAS and the collaborative routing system.

US 2009 210109 A1 discloses a system and method for computing flight plans for unmanned aerial vehicles (UAVs) while routing around obstacles having spatial and temporal dimensions.

### Summary of the invention

The present invention relates to an automated system of air traffic control according to appended independent claim 1 and a method for air traffic control of an unmanned aerial vehicle (UAV) according to appended independent claim 10. Advantageous features are set out in the appended dependent claims. DroNav is a highly automated Air Traffic Management (ATM) system for preferably small Unmanned Aerial Vehicles (UAVs) preferably flying at low altitude (usually under 1,200 feet, mostly under 400 feet) mostly in uncontrolled airspace (Class G).

Dronav is composed of hardware called DronAssistant, to be installed on the drone or UAV, and a highly automated ATM software called DronATC.

Dronav is a hardware/software/service complex for fully automated, semi-automated or manual UAV operations, which allows seamless integration of UAVs into the existing airspace through dedicated virtual ATC (VATC) infrastructure. Depending on the flight plan and theatre of deployment, DroNav is able to work with no terrestrial support infrastructure. The system is a highly redundant complex, combining both passive and active situation awareness, collision avoidance/conflict resolution methods and systems, sophisticated dual automatic pilot/referencing systems, and data link for VATC messages exchange.

A group of operating UAVs is able to communicate with each other and perform the Air Traffic Management (ATM) role through the distributed computing (workload sharing) methods, and if at least one of the UAVs is connected to the VATC, such UAV(s) feeds the air traffic related data within the local segment into the system for further processing by the VATC, or perform the basic ATM functions independently ("networking effect").

UAVs which operate in non-automatic mode, may not be able to process instructions received from their operators (pilots) if the execution of such instructions may lead to a potential conflict. The terrestrial (server) segment (VATC) is be responsible for collection of data from all the UAVs under its control, flight plan of traffic, navigation and conflict resolution instructions to the clients, and provide gateways to other stakeholders, such as civil and/or military ATC service providers. The system is also able to create complex flight plan patterns (a third-party hardware and/or software inspection), which allow UAVs to operate in semi-automatic mode.

### Description of the drawings

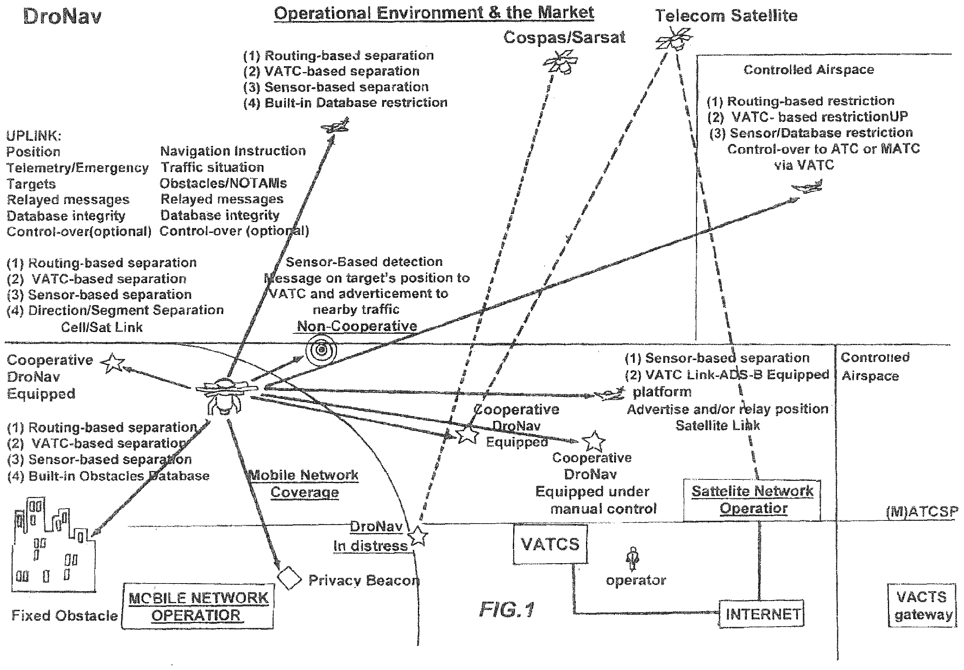

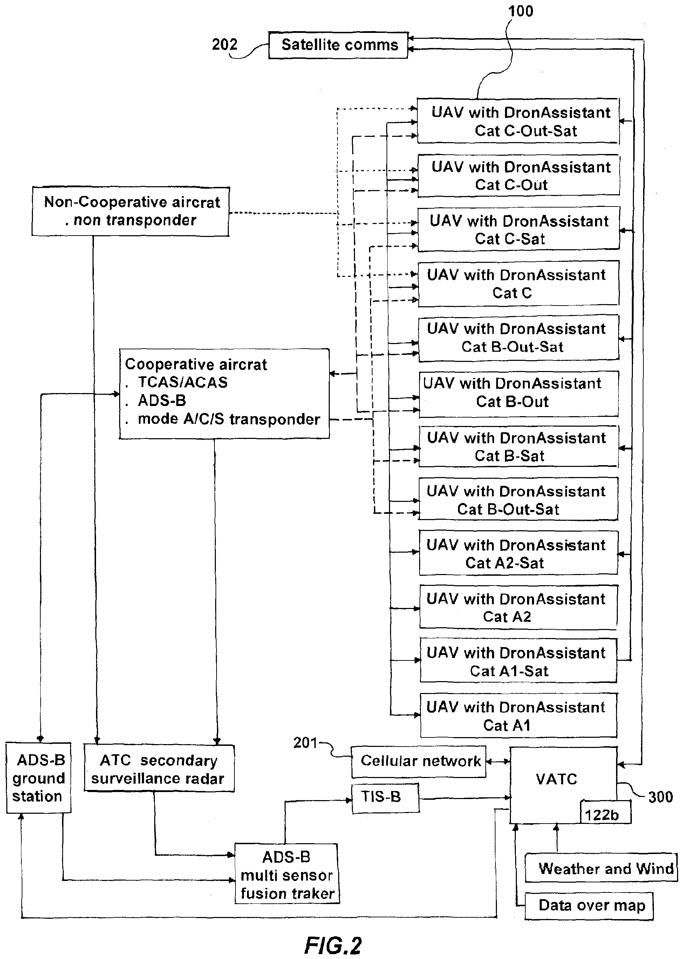

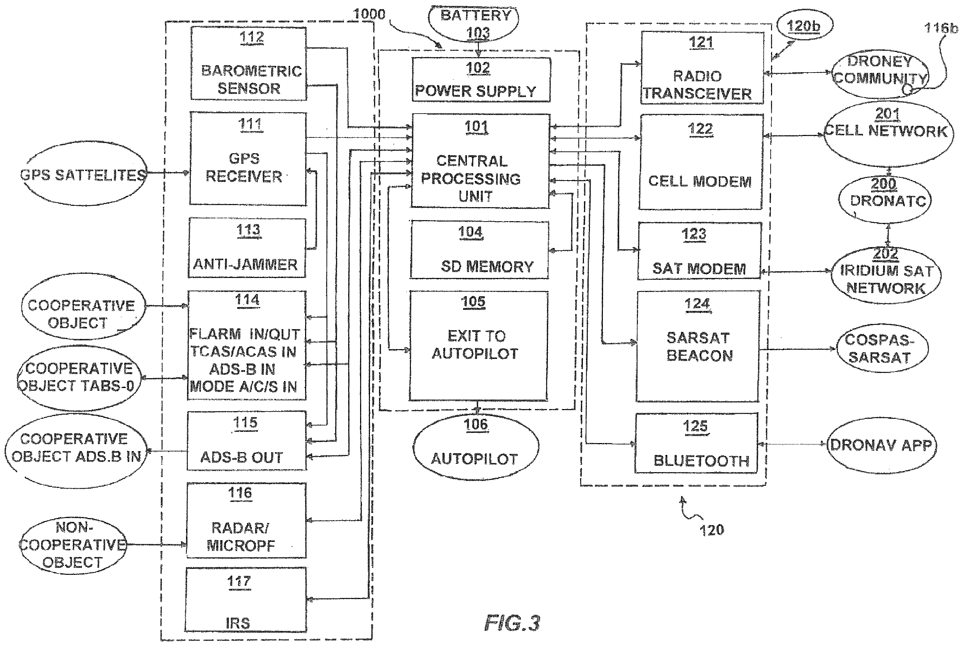

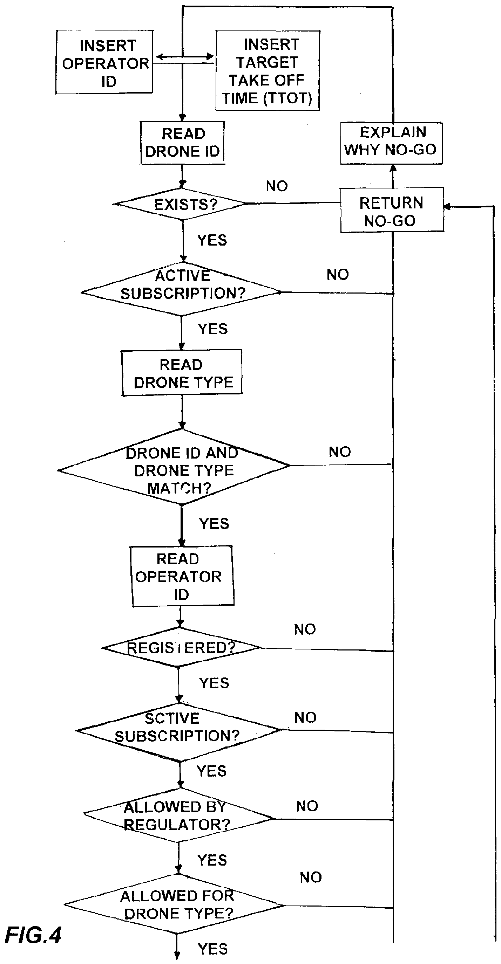

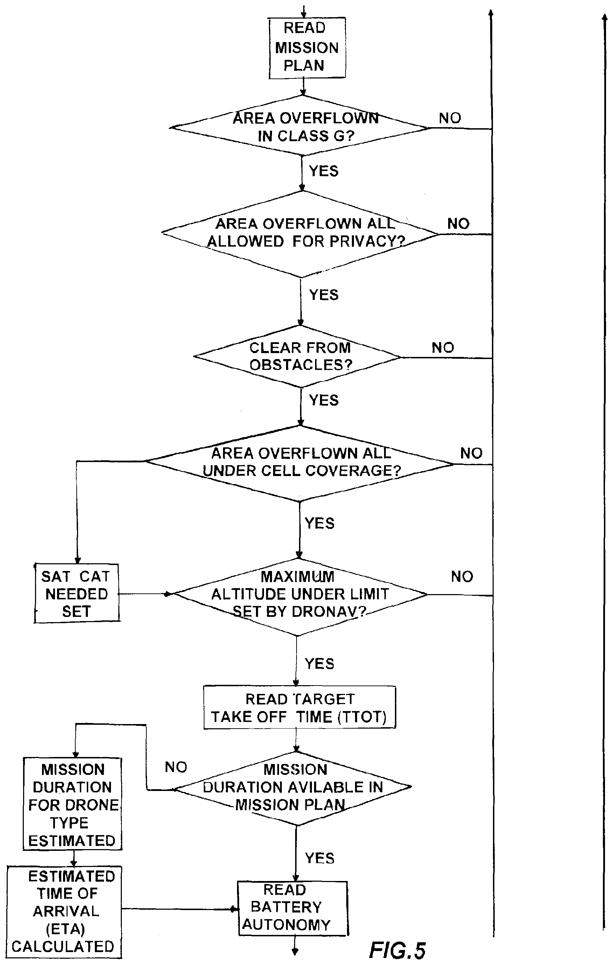

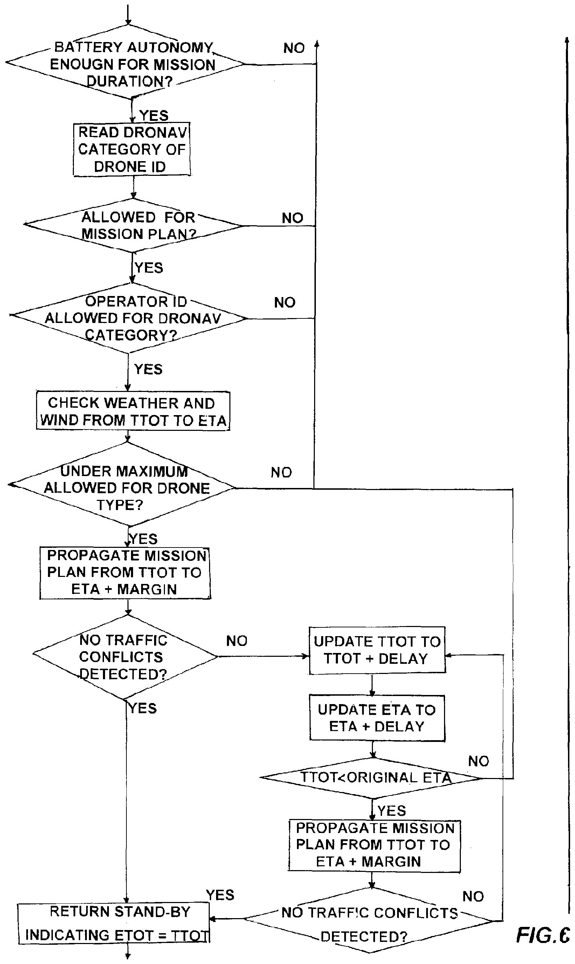

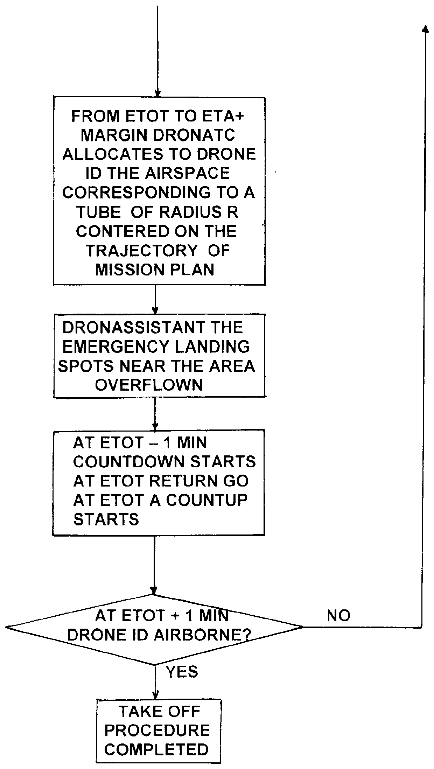

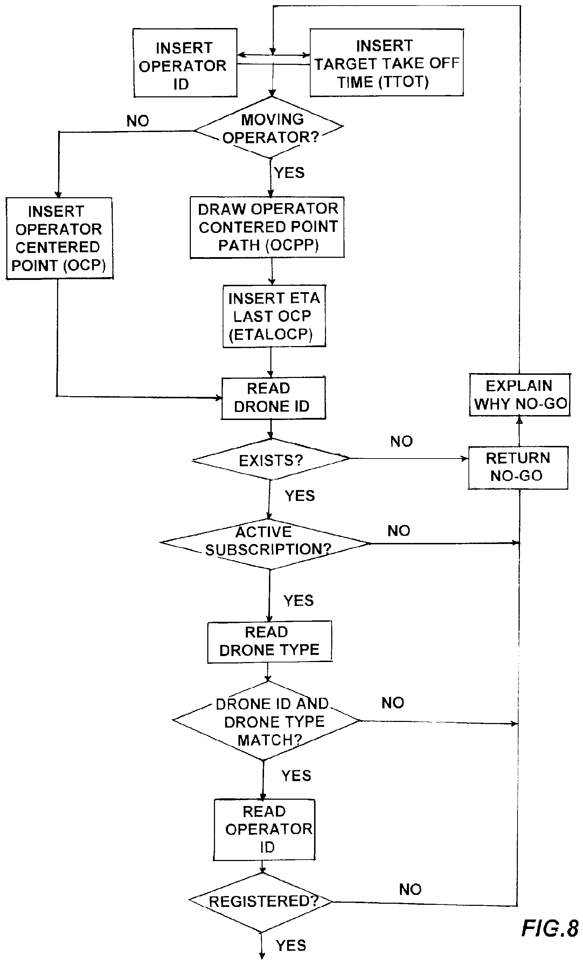

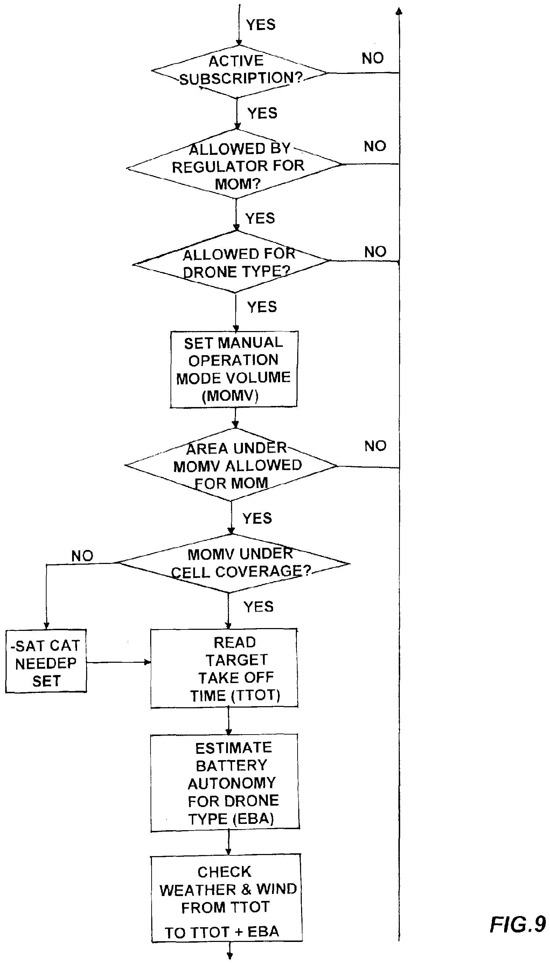

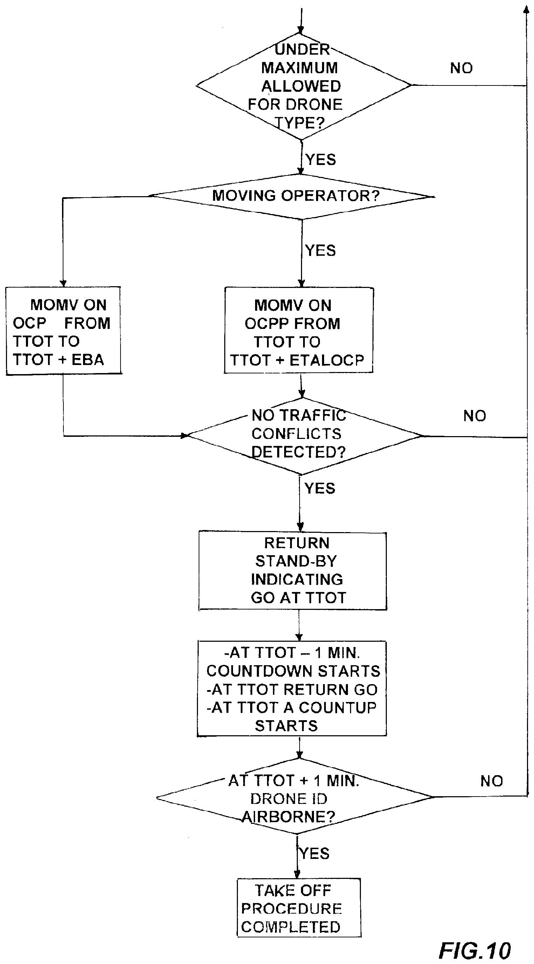

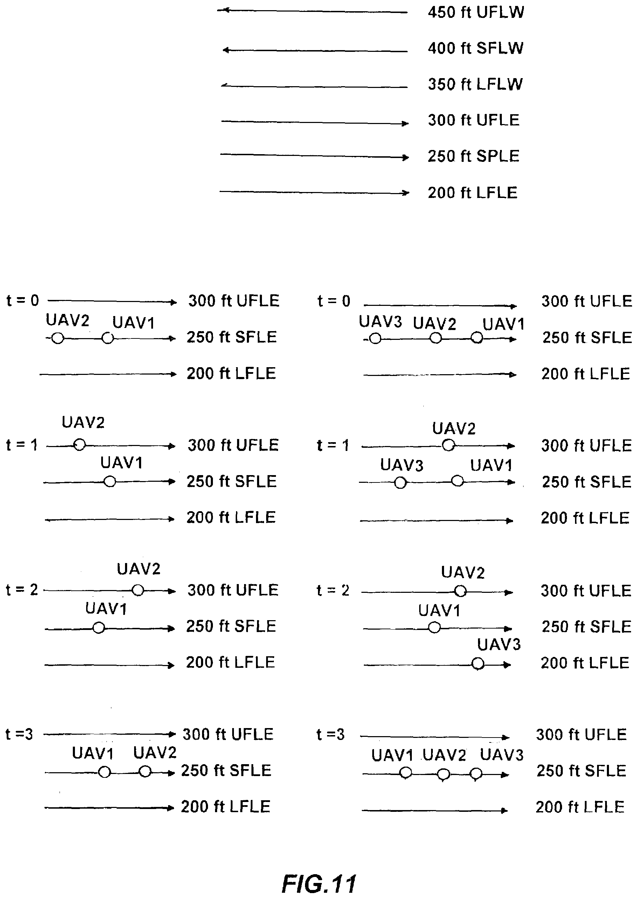

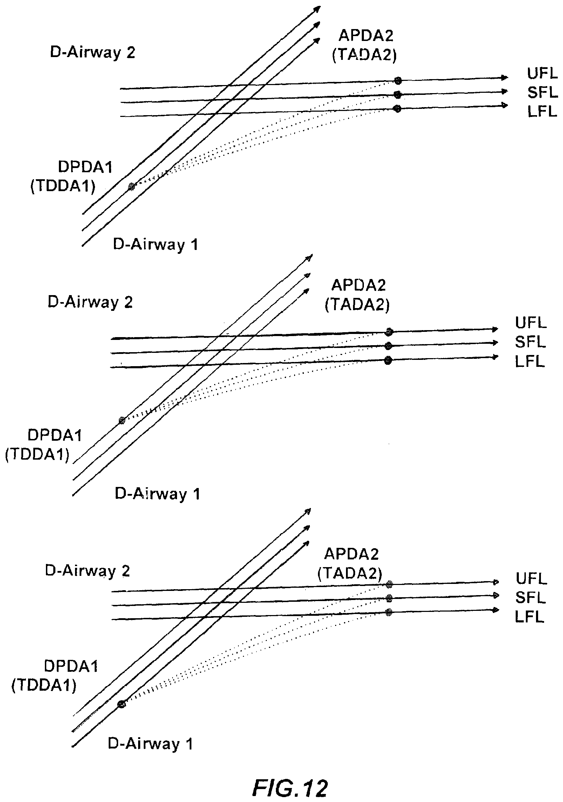

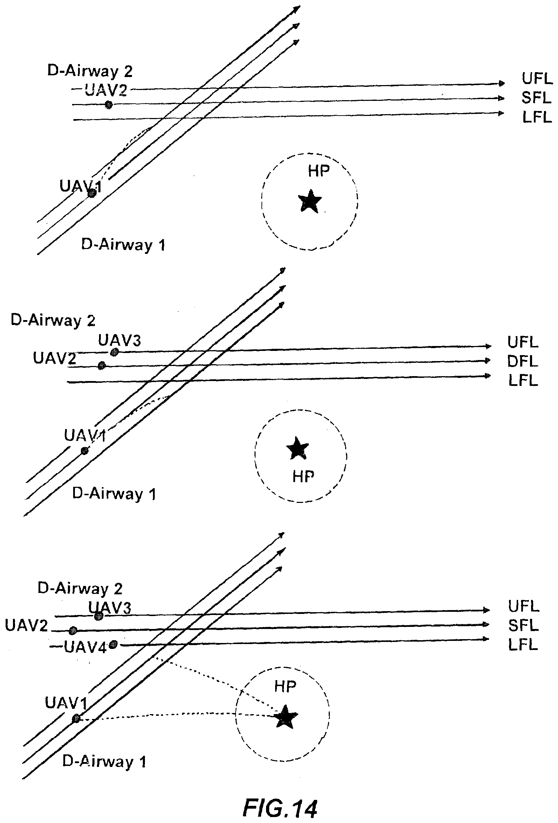

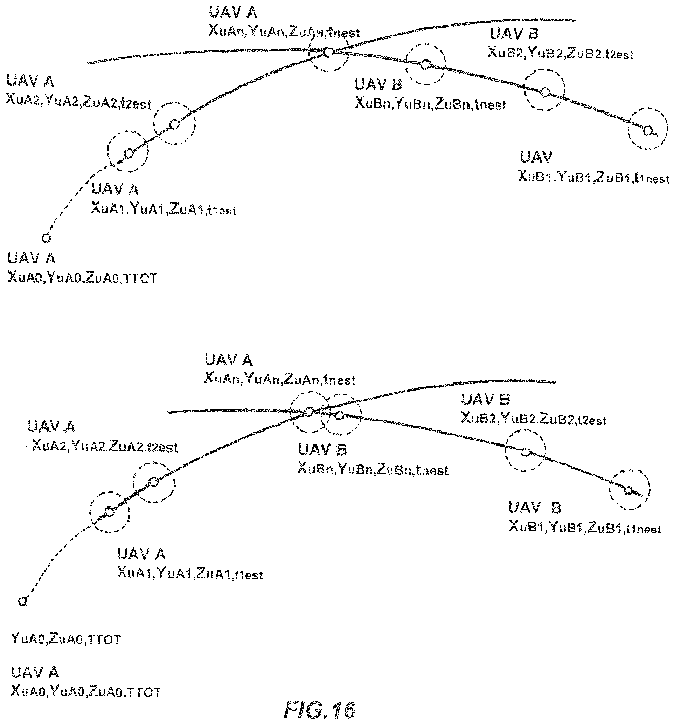

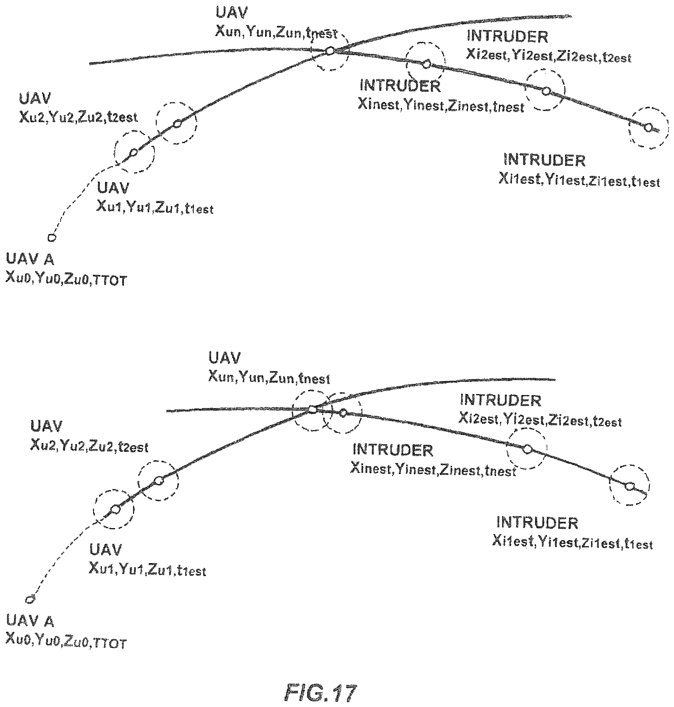

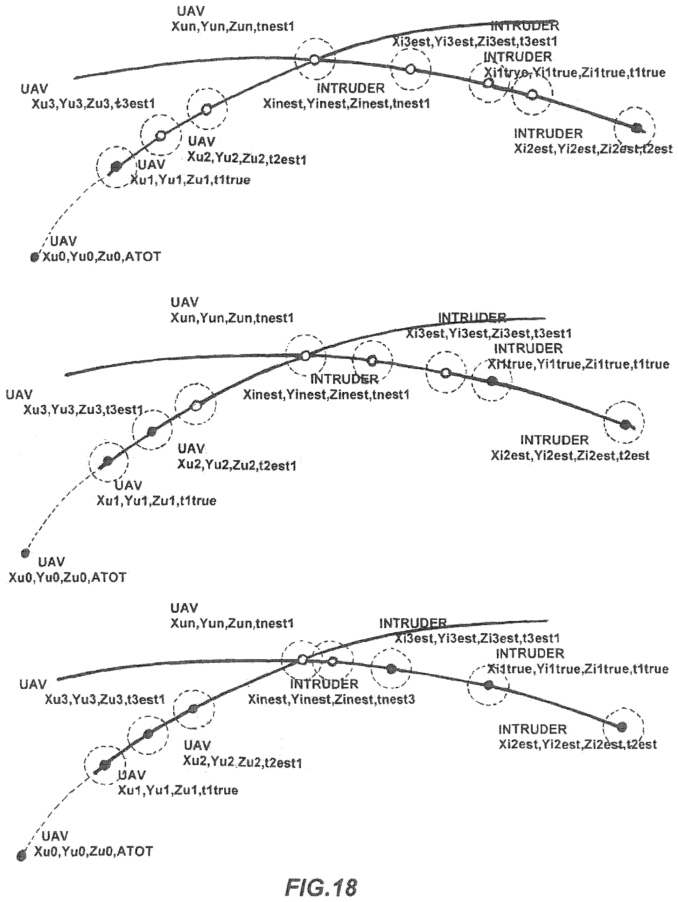

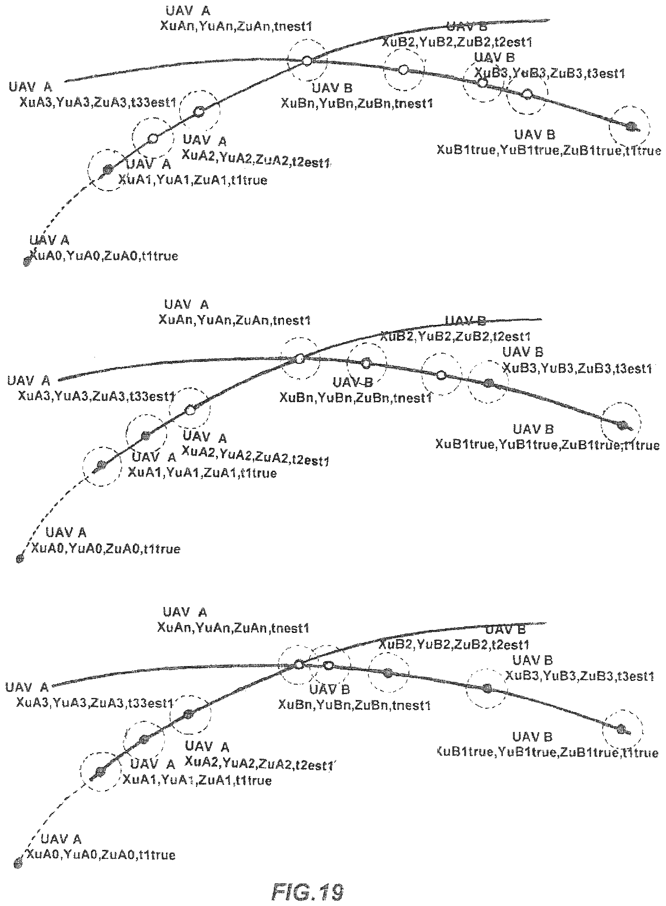

∘ Figure1 shows the operational environment, the method, and the various components of the system composed of a module device (named DronAssistant) installed (with software) on the UAV and a software (named DronATC) for Air Traffic Management acting as Air Traffic Control running on VATC server,
∘ Figure 2 shows how different versions (named Categories, or Cat) of the Dronav system operates in the environment,
∘ Figure 3 is a schematic block diagram showing various components comprised in a preferred embodiment of the DronAssistant to be installed on the UAV,
∘ Figure 4 - Figure 5 - Figure 6 - Figure 7 is a flowchart of process that shows DronATC instructions when interrogated (through DronAssistant installed on board of a UAV and Dronav App) for a take-off procedure in Fully Automated Mode (FAM),
∘ Figure 8 - Figure 9 - Figure 10 is a flowchart of process that shows DronATC instructions when interrogated (through DronAssistant installed on board of a UAV and Dronav App) for a take-off procedure in Manual Operations Mode (MOM),
∘ Figure 11 shows how flight levels for D-Airways are defined and how one or two UAVs in the same D-Airway overtake a slower UAV,
∘ Figure 12 - Figure 13 show how DronATC manages transition of a UAV from D-Airway 1 to D-Airway 2,
∘ Figure 14 - Figure 15 show how DronATC manages traffic at intersection between D-Airway 1 and D-Airway 2,
∘ Figure 16 and Figure 17 show how DronATC manages traffic between VATC0 Route Base Separation and UAV and between VATC0 Route Base Separation and GA,
∘ Figure 18 and Figure 19 VBS procedure comprised in DronATC.

While implementations are described herein by way of example, those skilled in the art will recognize that the implementations are not limited to the examples or drawings described. It should be understood that the drawings and detailed description thereto are not intended to limit implementations to the particular form disclosed but, on the contrary, the intention is to cover all embodiments falling within the scope of the invention as defined by the appended claims. The headings used herein are for organizational purposes only and are not meant to be used to limit the scope of the description or the claims. As used throughout this application, the word "may" is used in a permissive sense (i.e., meaning having the potential to), rather than the mandatory sense (i.e., meaning must). Similarly, the words "include," "including," and "includes" mean including, but not limited to.

### Detailed description of the invention

The system described and claimed in the present application is labelled as "Dronav" and it focuses on Unmanned Aerial Vehicle UAV 100, especially small ones, preferably operating in uncontrolled airspace (Class G) and flying at low altitudes (depending on the country, usually under 1,200 feet, mostly under 400 feet). A) Environment (Figure 1). In the followings a detailed description of Figure.1 is given.

The system DronNav is a hardware plus software complex for fully automated, semi-automated and manual UAV operations in a national aerospace. The main focus of the system is the safety of all operations, achieved through multiple layers of redundant, fail-safe components, code and procedures.

Preferably, Dronav is an automated system of air traffic control comprising:
- At least one unmanned aerial vehicle (UAV) 100 comprising a module device 1000 including at least a first processing unit 101, at least one sensor 112 operatively connected to said at least one first processing unit 101, at least one signals receiving device 111 , at least one data transfer device 120 for transferring traffic control information to a data transfer equipment 120b operatively connected to a virtual system of air traffic control (VATC) 300 and, preferably, to said at least one processing unit 101.
- Preferably, the virtual system of air traffic control (VATC) 300 comprises at least a second processing unit 301, and said data transfer equipment 120b, operatively connected to the second processing unit 301, and configured to exchange traffic control information with said at least one data transfer device 120.
- Preferably, the virtual system of air traffic control (VATC) 300 is arranged to analyze, through the at least second processing unit 301, traffic control information relating to the flight plan from the at least one unmanned aerial vehicle (UAV) 100 and being able to process a flight plan and communicate executable instructions to perform said flight plan to the at least one first processing unit (101),
- the at least one data transfer device 120 adapted to transfer messages between a plurality of unmanned aerial vehicles (UAVs).

The module device 1000 is hereby named as DronAssistant.

Preferably, the second processing unit 301 comprises a server or a computer processing unit (CPU) or an elaborating unit or the like.

In an embodiment, the second processing unit 301 is configured to receive, process and send data to UAVs via a network.

Preferably, the at least one data transfer device 120 comprises means of a radio transceiver 121 or cell modem 122 or a satellite modem and antenna 123 or a Sarsat beacon 124 or a Bluetooth and/or a Wifi modem 125 or the like.

In a preferred embodiment, the VATC 300 and the module device 1000 (DronAssistant) comprise a software (named DronATC) that is gainfully uploaded and frequently updated with pertaining data and information.

Preferably, the software DronATC comprises a database that contains said updated pertaining data and information.

Furthermore, in an embodiment, said at least one first processing unit 101 is arranged to:
o receive and process information obtained by a scanning operation performed by said at least one sensor 112 of any one of said plurality of unmanned aerial vehicles (UAVs),
o transmit the information relating to that said scanning system of virtual air traffic control (VATC) 300,
o receive and process information from a flight plan dates from that system of air traffic control virtual (VATC) 300 as a result of that scan,
o modify a flight path of the plurality of unmanned aerial vehicles (UAVs),
o transmit deployments or updates the information regarding instructions to perform said flight plan to the plurality of unmanned aerial vehicles (UAVs).

Preferably, the unmanned aerial vehicle (UAV) 100 comprises the module device 1000, called "DronAssistant" (DA), that is configured in order to send information (Uplink) through secure full duplex communications channels (Cellular or Satellite radio), thanks to the first processing unit 101 and to said signals transmitter 111, to the Virtual Air Traffic Control Server (VATCS) information on the UAVs Telemetry Data, including position, velocity, direction of flight, angular acceleration, barometric altitude, battery level, estimated battery autonomy, hardware integrity, emergency events, proximity of targets detected through onboard sensors 112, software integrity, relayed messages. DronAssistant module (DA) establishes, trough said first processing unit 101 and said signals transmitter 111, also a receiving (Downlink) data mode that gainfully includes navigation instructions from VATCS 300, elaborated by a specific second processing unit 301, traffic situation in the proximity of the UAVs last known or estimated position, known obstacles, relayed messages, software integrity, other special instructions. In addition, the communications channel shall contain a further usable connection line allowing authorized third parties to take direct control over the UAV.

Preferably, the automated system of air traffic control comprises at least an identification and data flight plan system for said at least one signals receiving device 111 and at least one sensor 112 with the function of barometer operatively connected to said at least one first processing unit 101, configured to detect conditions of possible air collision that activates the control of implementation of the predetermined action to avoid an air collision. Preferably, the at least one first processing unit 101 is configured to implement a predetermined maneuver to avoid a collision, overwriting commands related to a route or path previously received via said at least one signals receiving device 111 or said at least one data transfer device 120, activated in function updates received via both communication with said control system of the air traffic virtual (VATC) 300 and via direct detection via the at least one sensor 112 allocated into at least one of the plurality of unmanned aerial vehicles (UAVs).

Typical examples of first and second processing unit respectively 101 and 301 are elaborating data devices, central processing unit (CPU), servers and the like.

Depending on the parameters and restriction of a flight plan, which can be loaded through a dedicated interface (API will be available to third parties), or pre-loaded in case of manual operations, DA interacts with the environment according to the profile, the constrains or the challenges.

Preferably, the automated system of air traffic control according to claim 1, wherein said virtual system of air traffic control (VATC) 300 is adapted to process and guarantee the conditions and constraints predetermined for operability in automated air traffic for unmanned aerial vehicles (UAV) by the at least a second processing unit 301 by exchanging information with or receiving information from or about other aircrafts, obstructions, satellite communication systems and cellular, government agencies and regulators.

Fully Automated Mode (FAM) implies that the unmanned aerial vehicle (UAV) 100 has been assigned a task which involves a pre-established routine operation (does not include "IF" scenarios, or operator's involvement), for example, autonomously cruise from take-off to landing through pre-programmed GNSS waypoints, or a delivery of payload from point A to point B along a pre-programmed route. The route shall be verified, eventually planned, and filed automatically by DroNav centralized servers, acting as first processing units 101, upon a request by the UAV operator through Dronav App or through a third-party software. API to access VATCS can be purchased by developers on a non-discriminatory basis. VATCS Billing System shall charge the party requesting the flight plan a processing fee.

Interaction with Fixed Obstacles - General separation rules (controlled/uncontrolled space)
(1) ROUTING BASED SEPARATION (RBS). VATCS plans all the routes using latest fixed obstacles databases (available through third parties) and active NOTAMs, therefore UAV shall not approach any fixed obstacles during normal operations;
(2) VATC BASED SEPARATION (VBS). In case VATCS becomes aware of any obstacle which has not been taken into account during the route planning, the VATC sends information to the UAV on such obstacle, and/or modifies the active UAVs flight plan accordingly and uploads it to the UAV;
(3) SENSOR BASED SEPARATION (SBS). In case the VATC is unable to transmit data to/from the UAV as a result of a network outage or UAVs radio failure, UAV relies on on-board sensors (FLARM, ADS-B, radar as part of the DronAssistant, see Figure.3) to detect obstacles and takes avoiding action in accordance with the automated Collision Avoidance Algorithm (CAA). Preferably, the DronAssistant comprises a first detection sensor 116, operatively connected to the first processing unit 101 which, for example is a radar or cameras for imaging or an array of microphones. As soon as practical, the UAV returns to the originally planned route. The on-board transmitters advertise the deviation for further relay to the VATCS (in case UAV-to-UAV link is active). All such maneuvers are recorded to on-board FDR (Flight Data Recorder) module and transmitted to VATCS as soon as a communications link has been restored;
(4) BUILT-IN DATABASES. In case of multiple hardware failures, where no data exchange with other UAVs and/or VATCS is possible, and active sensors integrity is compromised, UAV (a) continues navigation strictly in accordance with the active flight plan, (b) relies on built-in databases for fixed obstacles avoidance, (c) relies on GNSS and/or Inertial Reference System (IRS) for prime navigation and (d) resets cellular/satellite radio in an attempt to restore Air-to-Ground communication. VATCS in case of a loss of datalink with an UAV (a) assumes that the UAV will proceed with the flight plan activated, (b) reroutes all other UAVs under its control (where a possibility of collision exists) accordingly and (c) notifies all other airspace users about the UAV in distress;
(5) In case of multiple hardware failures and where the continuation of a flight plan is no longer practical, DA may execute Preventive Landing or Controlled Crash maneuver.

In this sense, the DronATC comprises information regarding a method comprising:
- developing through at least one of said at least one second processing unit 301 a sequence of information relating to a flight path and communicate it to at least a first processing unit 101, through at least one data transfer device 120, defining, by means of at least one sensor 112, a path to be taken depending on areas with obstacles stored in a database from which to keep a predetermined distance of separation,
- elaborating through said at least a second processing unit 301 a sequence of information and communicate it to said at least one first processing unit 101, through said at least one data transfer device 120, defining a path to be taken depending on the areas from which maintain a predetermined separation distance.

Interaction with cooperative (DA equipped) airspace users - uncontrolled airspace
(1) Prime navigation is through the Routing Based Separation. The route planned for each individual UAV shall not conflict with those of other air traffic users, or put public and/or property in danger;
(2) Any conflict resolution is in accordance with VBS as described earlier;
(3) In case the VATCS is unable to transmit data to/from the UAV as a result of a network outage or UAVs radio failure, UAV relies on on-board sensors (e.g. FLARM, ADS-B, radar as part of the DronAssistant, see Figure.3) to detect targets and takes avoiding action in accordance with the automated Collision Avoidance Algorithm (CAA). As soon as practical, the UAV returns to the originally planned route. The on-board transmitters advertise the deviation for further relay to the VATCS (in case UAV-to-UAV link is active). All such maneuvers are recorded to on-board FDR module and transmitted to VATCS as soon as a communications link has been restored;
(4) In case of multiple hardware failures, where no data exchange with other UAVs and/or VATCS is possible, and active sensors integrity is compromised, UAV (a) continues navigation strictly in accordance with the active flight plan, (b) relies on built-in databases for fixed obstacles avoidance, (c) relies on GNSS and/or Inertial Reference System (IRS) for prime navigation and (d) resets cellular/satellite radio in an attempt to restore Air-to-Ground communication. VATCS in case of a loss of datalink with an UAV (a) assumes that the UAV will proceed with the flight plan activated, (b) reroutes all other UAVs under its control (where a possibility of collision exists) accordingly and (c) notifies all other airspace users about the UAV in distress. Where rerouting is required, DA uses Sector (Segment)-based Separation Rules for vertical navigation;
(5) In case of multiple hardware failures and where the continuation of a flight plan is no longer practical, DA may execute Preventive Landing or Controlled Crash maneuver.
(6) Moreover, a no-flight zone (virtual obstacle, fixed or moving) can be transmitted directly by a physical device positioned in the area of the no-flight zone (this device is defined as DronRepeller). The no-flight zone (for example due to privacy or security reasons) might be temporary or a new permanent one that has not been previously inserted into DronATC database either in DronAssistant or VATC servers through the regular data packages that update no-flight zones (such as data provided by local Air Navigation Service Providers, ANSPs), but it is the DronRepeller that directly feeds this new no-flight zone both in DronATC database via DronAssistant (that are close enough to receive its direct signal) and/or VATC servers (through cell or satellite link).
   In order to further improve the information regarding the update no-flight zones DronAssistants operating in a close area nearby said update no-flight zones intra communicate via Wifi or Radiofrequency communications in order to verify the updated information contained in each DronAssistant.
   In this way, the DronAssisants intranet so activated works as data bridge among DronAssistants with respect to information regarding physical fixed or moving obstacles.

Interaction with Non-cooperative airspace users - uncontrolled airspace.

The prime means of separation from non-cooperative airspace users in uncontrolled airspace is through SBS as described above. In case targets cannot be interrogated, passive radar or cameras for imaging or array of microphones, comprised in first detection sensor 116, provide approximate distance to the target and a sector (2 dimensions). CAA intervenes if DA detects that the target is likely to create a conflict with the UAV. As soon as such a target has been detected, and it is not a known obstacle, DA transmits the information on the target to VATCS, and, in case UAV-to-UAV link has been established, to all nearby UAVs. Independently from each other, the VATCS and/or a cluster of cooperative UAVs, attempt to use autotriangulation to establish the precise position of the non-cooperative target, and such remains under constant control for avoidance of any further conflicts, until such a target seizes to present any danger to UAVs.

It may occurs that a physical fixed or moving non-cooperative obstacle is not included in the latest version of the ground obstacles map database stored in the DronATC and or in the VATC servers.

Preferably, in this case, the DronAssistant detects the non-cooperative obstacle through its sensors (for example using radar or cameras for imaging or an array of microphones), and apply the Sensor Based Separation (SBS) triggering the Collision Avoidance Algorithm (CAA) by the first processing unit 101.

Preferably, after that the DronAssistant has detected the non-cooperative obstacle not included in the latest version of the ground obstacles map database of DronATC or VATCs servers, a non-cooperative obstacle communication phase is triggered:
- The first processing unit 101, comprised in the DronAssistant of the UAV that detected the non-cooperative obstacle transmits, according to instructions of the DronATC, uploads information regarding the non-cooperative obstacle (e.g. it's position, size, type, velocity, trajectory, etc.) to other DronAssistants, comprising their processing units 101b, by means of the at least one data transfer device 120, preferably a radio transceiver 121 communications (via DronAssistant to DronAssistant), activating an intra-UAVs network with UAVs reachable within a predetermined communication range R. As an example, the first processing unit 101, preferably the CPU, comprised in the DronAssistant activates Wifi or Radio Frequency communication devices in order to communicate with nearby UAVs.
- Simultaneously or alternatively, the first processing unit 101, preferably the CPU, comprised in the DronAssistant of the UAV that detected the non-cooperative obstacle transmits, according to instructions of the DronATC, uploads information regarding the non-cooperative obstacle (e.g. it's position, size, type, trajectory, etc.) to VATCs servers.

Preferably the data transfer device 120 comprises means of a radio transceiver 121 or cell modem 122 or a satellite modem and antenna 123 or a Sarsat beacon 124 or a Bluetooth and/or a Wifi modem 125 or the like. In this sense, the DronATC comprises information regarding a method wherein a plurality of unmanned aerial vehicles (UAV) 100 is controlled, each vehicle comprising an automated system further comprising:
- Detecting by said at least one sensor 112 or by a first detection sensor 116, operatively connected to the first processing unit 101 of a first unmanned aerial vehicles (UAV) 100, a non-cooperative obstacle,
- Uploading by means of a data transfer device 120 comprised in said unmanned aerial vehicle UAV 100 information regarding the non-cooperative obstacle to a further reachable processing units 101b, comprised in other unmanned aerial vehicles UAVs, comprised within a predetermined communication range R.

Preferably, the predetermined communication range R is a range covered by the data transfer device 120.

Preferably, the first detection sensor 116 comprises a radar or camera for imaging or an array of microphones.

Preferably, in case the communication between a DronAssistant that detected the new non-cooperative obstacle and VATCs is temporary down, it is the first DronAssistant that has the communication via cell or satellite with VATC servers up and running that passes this new information to VATCs servers, so that VATCs servers can verify the new fixed obstacle and update the ground obstacles map database with the new fixed obstacle data.

Preferably, in case the communication between DronAssistant and VATC is temporary down a non-cooperative obstacles request information phase: the first processing unit 101 of a UAV that detects a condition of connection failure with the VATC servers starts, according to instructions contained in the DronATC, a request of updated information with the DronAssistants of neighbouring UAVs.

Gainfully, both the new non-cooperative obstacle communication phase and the non-cooperative obstacles request information phase produce the technical effect of quickly and efficiently improving and updating the information regarding non-collaborative obstacle thus increasing the possibilities of positive collision avoidance of the non-cooperative obstacle.

It is further preferred that, both the non-cooperative obstacle communication phase and the non-cooperative obstacles request information phase are activated by said first processing unit 101 comprised in said DronAssistant only after the new non-cooperative obstacle detection. In this way, an energy saving of the battery is achieved resulting in a more efficient usage of the energetic resources of the UAVs.

Preferably, when the non-cooperative obstacle is detected the first processing unit 101, gainfully the CPU, according to instructions comprised in DronATC, applies the Sensor Based Separation (SBS) triggering the Collision Avoidance Algorithm (CAA).

In case the communication between the DronAssistant that detected the previously unknown moving obstacle and VATCs is temporary down, it is the first DronAssistant that has the communication via cell or satellite with DronATC servers up and running that passes this new information to VATCs servers, so that VATCs servers updates its airspace traffic data with the new moving obstacle.

Moreover, other DronAssistants that with their sensors intercept the same moving obstacle will help refine its trajectory so that VATCs or interconnected DronAssistants can better estimate where the previously unknown moving obstacle might be in the future and transmit this information to DronAssistants in the area affected by it.

In facts, preferably, when the DronAssistant detects a physical non-collaborative obstacle not included in the latest version of the ground obstacles map database of the DronATC nor in the airspace traffic data in the VATCs servers, not only it proceeds with SBS, but it also activates a further trajectory-estimation-procedure to estimate and foretell the evolution of the non-collaborative obstacle as an intruder position as a function of time.

Indeed, sensors on the DronAssistant detect not only the position of the non-collaborative obstacle, but also its velocity thus defining a spatial vector. Thanks to this information, knowing the non-collaborative obstacle position and velocity at the detection time, it is possible to propagate the vector in space-time dimensions and estimate where it might be in the future at a given time.

Preferably, when the DronAssistant detects the non-collaborative obstacle, not available in DronATC database or VATCs servers, it triggers the non-cooperative obstacle communication phase previously described plus a request, sent to reachable processing units 101b comprised in DronAssistants of other UAVS, of modification of the frequency of data collections via sensors and/or data flight plan among processing units 101b of other DronAssistants of UAVs, reachable within the predetermined communication range R and comprised within the area affected by the non-collaborative obstacle. Furthermore, and between these DronAssistants and VATCs: the frequency of updating and data exchange is gainfully increased producing the effect of reducing latency in non-collaborative obstacle detection and inter UAVs and UAVs-VATCs data exchange communications.

In this sense, the DronATC preferably comprises information regarding a method comprising:
- Triggering by the first processing unit 101 a request, sent to the reachable processing units 101b, comprised in other reachable unmanned aerial vehicles UAVs, to increase the frequency of data collection by first or second detection sensors 116,116b and/or data flight plan exchange between the reachable processing units 101b and comprised within an area affected by the non-collaborative obstacle.

Preferably, the first detection sensors 116 are sensors comprised in the Dronassistant of a first UAV, second detection sensors 116b are sensors comprised in other reachable unmanned aerial vehicles UAVs comprising reachable processing units 101b which are are operatively connected to the radio transceiver 121 or to the Bluetooth and/or a Wifi modem 125 of the first processing unit 101.

This technical solution produces the technical effect of optimizing the detection and definition of the position and trajectory of the non-collaborative obstacle thus allowing the DronAssistants of the UAVS involved to trigger the CAA in an anticipated and more controlled manner with respect to UAVs not communicating between them.

This technical solution clearly reveals itself as a crucial in case of UAV-VATCs communication fails with a possible non-collaborative obstacle: in this case, without the triggered frequency improved request between reachable UAVs, the UAV would be able to estimate the non-collaborative obstacle collision menace only basing on the SBS and this could be a too late response for the UAV involve.

Increasing intercommunications between UAVs is a technical way to overcome this dangerous condition.

Furthermore, improving frequency of data collections via sensors and/or data flight plan exchange among DronAssistants is a technical solution aimed at furtherly improving the information regarding the non-collaborative obstacle trajectory and especially only at the moment when effectively needed.

Preferably, in order to try to estimate where the non-collaborative obstacle might be after the first detection, DronAassistant, according to instructions comprised in DronATC, uses probabilistic analysis and algorithms to propagate a first detected vector of the non-collaborative obstacle forward in time.

Also preferably, the DronAssistants that are within a reachable communicating area with respect to the DronAssiastant that was the first one to detect the non-collaborative obstacle, said DronAssiastant triggers a distributed computing request phase and sends the relative data regarding the non-collaborative obstacle and instructions to perform a distributed computing between the first processing units 101 and the reachable processing units 101b of each of DronAssistant comprised in each UAVs involved, in order to apply probabilistic analysis and algorithms to calculate the propagation of the first vector forward in time and space.

In this sense, the DronATC preferably comprises information regarding a method comprising:
- Triggering by the first processing unit 101 a request and instructions, sent to the reachable processing units 101b, comprised in other reachable unmanned aerial vehicles UAVs, of a distributed computing of data regarding the non-collaborative obstacle, in order to apply probabilistic analysis and algorithms to calculate the propagation of the trajectory of the non-collaborative obstacle forward in time and space.

Preferably, the reachable processing units 101b are operatively connected to the radio transceiver 121 or to the Bluetooth and/or a Wifi modem 125, which are operatively connected to the first processing unit 101.

Preferably, in the event that a second detection of an object not previously foreseen nor by DronAssistants nor by VATCs takes place, either by the same DronAssistant that performed the first detection or by another one, both VATCs and DronAssistants in the area perform distributed computing, thanks to their respective processing units, and use probabilistic analysis and algorithms to estimate if the second detection event might be a second detection of the first intruder, or if it is a new intruder. In case the system estimates that the second detection is likely to be a second point in the trajectory of the same intruder detected earlier, it uses the second point to better estimate both by VATC servers and by distributed computing on multiple DronAssistants the possible evolution of the trajectory of the non-collaborative obstacle. Those DronAssistants that might be affected by the predicted future position of the intruder perform a VBS. This type of VBS might be triggered by VATCs as in the normal procedure and as describer earlier, or by the distributed computing performed among DronAssistants.

Preferably, to perform Sensor Based Separation (SBS), the DronAssistant comprises, as one its subsystem, a FLARM (or a FLARM board). The FLARM is commonly used in General Aviation (GA), and especially by the glider community, as an advising device for the pilot to receive warnings, in the form of both a sound and visual alarm, about potential collisions. In General Aviation (GA), in the case that a possible collision is detected by FLARM, an acoustic signal is given, and its strength is proportional to the alarm level. Moreover, information about the relative position of the intruder (angle and relative altitude) is plotted on a display. The DronAssistant incorporates the FLARM board and applies its data output to trigger Collision Avoidance Algorithm (CAA) for the SBS.

As one of its outputs, FLARM returns the Alarm Level, ranging from 0 to 3: more specifically, the value 0 means no alarm for dangerous situations, the value 1 means alarm and 13 to 18 seconds to impact, the value 2 means alarm and 9 to12 seconds to impact, the value 3 means alarm and 0 to 8 seconds to impact. FLARM also returns the bearing, distance and altitude difference to/of the intruder. Other outputs exist. The DronAssistant, according to instructions comprised in the DronATC, uses selected outputs from FLARM to trigger CRA at a given preset Alarm Level and for the Alarm Level persisting for a preset amount of time. If triggering of the CAA takes place, the DronAssistant uses other FLARM outputs such as the bearing, distance and relative altitude difference to the obstacle as inputs for the CAA. In performing CRA, the DronAssistant reads the type of the intruder, if available, so that the rules of the air and priorities are respected; for example, GA has priority over UAVs, among UAVs a fixed-wing has priority over a multicopter, a UAV operated for special authorized flight plans might have temporary priority over other vehicles despite its Type, etc. Direct communication between two DronAssistants and among DronAssistants enables each DronAssistant to identify the Type of the other DronAssistants, coordinate with others, and thus select the appropriate CRA.

When the CRA is triggered and executed, the DronAssistant sends information about this event both to VATC servers and to other DronAssistants via direct and bridge communication DronAssistant to DronAssistant.

Moreover, with the goal to enable the market for autonomous cars, chip makers recently have been developing and releasing chips that combine GNSS receivers with MEMS (accelerometers), where the firmware they developed connects the two and enables dead reckoning: if the signal of the GNSS receiver becomes too weak (for example in the urban canyon, or a tunnel, or in a multi level parking), the firmware switches from the GNSS receiver to the MEMS, integrating acceleration and providing an accurate position of the vehicle: then it switches back to the GNSS receiver when the signal becomes again strong enough. Preferably, DroNav, in its DronAssistant, comprises and applies these new devices in the context of UAVs equipments, not only to obtain a precise drone position when the GNSS signal degrades, but also as an antijamming and antispoofing method on UAVs. Indeed, this technical solution produces the following technical effect: if an attack takes place and the GNSS position is hacked and deviates beyond a certain tolerance set, the DronAssistant temporarily switches to the MEMS for its position reporting to VATCs, and transmits this information also, along with a warning, to VATC and directly to other DronAssistants in the area.

Preferably, the DronAssistant, according to instruction comprised in the DronATC, uses different methods and sensors to detect non-cooperative obstacles. In one preferred embodiment, DronAssistant comprises an array of microphones and a storing library containing different types of noises, so that a non-cooperative obstacle (e.g. a helicopter or an airplane) can be detected and recognized by the an array of microphones estimating also its position (distance and spherical angle) with respect to the DronAssistant involved.

Interaction with targets in uncontrolled airspace above the ceiling (400FT) and in controlled airspace.
(1) The prime method of separation from airspace users in controlled airspace is RBS: no route shall be planned by VATCS in such a manner that it will take a UAV close to controlled airspace, unless special exemption has been sought and granted (subject to approval by the responsible ATCSP).
(2) VATCS shall be restricting all the attempts by a UAV to penetrate controlled airspace, unless such a perflight plan has been granted.
(3) In case of loss of communications, or where the operator is trying to manually override restrictions imposed by the VATCS, DA activates geofencing mode: UAV's current position information, derived from GNSS and/or IRS, is constantly checked against the database of restricted airspace sectors, and where a risk of the penetration into a restricted zone exists, DA executes Holding Pattern maneuver and attempts to transmit the relevant information to the VATCS.
(4) In special circumstances (for example, authorized law enforcement flight plans), VATCS opens a secure tunnel to third parties through a dedicated interface and surrenders control over the UAV. In such a case, the party exercising the control assumes all responsibilities over the UAV.
B) Different Cat (Figure 2 and Figure 3).

In the followings a detailed description of Figure 2 is given.

Different versions of the DronAssistant device are described, and they are called Categories (or Cat).

Cat A1 is a simple tracker and makes the UAV with the DronAssistant Cat A1 connected and visualized in Dronav through the DronATC. There is also a more complex version of the tracker, called DronAssistant Cat A2, with connection and bypass to commands for eventual overriding of operator's instructions triggered by the DronATC.

Cat B is the entry version with collision and avoid sensors, and it is able to sense cooperative objects with Traffic Collision Avoidance System (TCAS), or Airborne Collision Avoidance System (ACAS), or FLARM, or ADS-B-In, or A/C/S transponder.

Cat B-OUT adds ADS-B Out, and it can be sensed by cooperative object (for example from GA and helicopters) that have ADS-B In capability.

Cat C is an evolution of Cat B, adding sensors to detect also non-cooperative objects. Such sensors might be an array of microphones and/or a radar and/or cameras for imaging and optical flow processing.

Cat C-OUT adds ADS-B Out, and it can be sensed by cooperative object (for example from GA and helicopters) that have ADS-B In capability.

All Categories come in two versions for communication link with the DronATC servers: the standard one is through the cellular network, while the -Sat variation adds to the standard one also a modem and antenna so that communication between DronAssistant and DronATC is done by satellite.

Hereby a detailed description of Figure.3 is given. Figure.3 is a schematic block diagram showing the various components of the device named DronAssistant to be installed on the UAV. In the following each block is numbered and a respective element is described:
Block 1. Element 112 is a sensor. Preferably, it is a barometric sensor configured to measure the UAV altitude via pressure,
Block 2. Element 111 is a signals transmitter or a signals receiving device. In particular embodiments it is a GNSS receiver,
Block 3. Element 113 is an anti-jamming element to protect the GNSS receiver,
Block 4. Element 114 is FLARM, TCAS/ACAS IN, ADS-B IN, mode A/C/S transponder,
Block 5. Element 115 is ADS-B Out,
Block 6. Element 116 is a radar or camera for imaging or an array of microphones,
Block 7. Element 117 is an Inertial Reference System (IRS),
Block 8. Element 108 is power supply and connection to a battery,
Block 9. Element 101 is a first elaboration or processing unit. In preferred embodiments it is a Central Processing Unit (CPU),
Block 10. Element 104 is SD memory,
Block 11. Element 105 is an exit port for wires to be connected to the UAV automatic pilot,
Block 12. Element 121 is a radio transceiver for data communication with other DronAssistants,
Block 13. Element 120 is a data transfer element or data transfer device. In preferred embodiments it is a cell modem with antenna,
Block 14. Element 123 is a satellite modem and antenna
Block 15. Element 124 is a Sarsat beacon for communication with Cospas-Sarsat network
Block 16. Element 125 is a Bluetooth and/or a Wifi modem for flight plan plan upload from local ATC (flight plan planner) to the DronAssistant and for local communication with Dronav App
Block 17. Element 300 is Virtual Air Traffic Control
Block 18. Element 301 is a second elaboration or processing unit,
Block 19. Element 106 is an automatic pilot.

Cat A1 may be composed of Blocks (1)-2-(3)-8-9-10-12-13-16.

Cat A1-Sat may be composed of Blocks (1)-2-(3)-8-9-10-12-13-14-16.

Cat A2 may be composed of Blocks (1)-2-(3)-8-9-10-11-12-13-16.

Cat A2-Sat may be composed of Blocks (1)-2-(3)-8-9-10-11-12-13-14-16.

Cat B may be composed of Blocks 1-2-3-4-(7)-8-9-10-11-12-13-(15)-16.

Cat B-Sat may be composed of Blocks 1-2-3-4-(7)-8-9-10-11-12-13-14-(15)-16.

Cat B-Out may be composed of Blocks 1-2-3-4-5-(7)-8-9-10-11-12-13-(15)-16.

Cat B-Out-Sat may be composed of Blocks 1-2-3-4-5-(7)-8-9-10-11-12-13-14-(15)-16.

Cat C may be composed of Blocks 1-2-3-4-6-(7)-8-9-10-11-12-13-(15)-16.

Cat C-Sat may be composed of Blocks 1-2-3-4-6-(7)-8-9-10-11-12-13-14-(15)-16.

Cat C-Out may be composed of Blocks 1-2-3-4-5-6-(7)-8-9-10-11-12-13-(15)-16.

Cat C-Out-Sat may be composed of Blocks 1-2-3-4-5-6-(7)-8-9-10-11-12-13-14-(15)-16.

### C) How DronATC works for "clear to take off" in FAM

Here a detailed description of Figure.4 - Figure.5 - Figure.6 - Figure.7 is given. It is a flowchart of process that shows how DronATC works when interrogated (through DronAssistant installed on board of a UAV and Dronav App) for a take-off procedure in Fully Automated Mode (FAM).

Operations executed by DronAssistant and DronATC are respectively performed by said first and second processing unit 101 and 301. For Fully Automated Mode (FAM) the UAV operator designs the flight plan (flight) plan using the UAV-specific flight plan planner, that returns a trajectory made of multiple GNSS waypoints. There are two options to upload the (proposed) flight plan plan on the UAV-specific automatic pilot. The first option is that data is transferred from the UAV-specific flight plan planner (PC or tablet), where said second processing unit 301 is housed, to the UAV-specific automatic pilot 106 via Bluetooth and/or Wifi modem (or interface or channel or the like) 125, and while data is transferred via Bluetooth and/or Wifi the first processing unit 101 allocated in the DronAssistant hardware receives, elaborates and saves data, and then sends it to VATC second processing unit 301 (via cell network 201 or Satellite link 202, depending on the Cat). The second option is that the UAV-specific flight plan planner (provided that it has internet connection, either through cell network 201 or satellite link 202) uploads data, through said cell modem 122 or sat modem 123, to VATC, that then uploads back the proposed flight plan plan on the UAV-specific automatic pilot 106. In both the cases the operator needs the "GO" from VATC to proceed to take-off, otherwise all DronAssistant Cat (apart from Cat A) may lock, by the first processing unit 101, the UAV-specific automatic pilot and do not allow the UAV to take off and proceed.

Preferably, the automated system of air traffic control, comprises a device for indication of GNSS position and an anti-jammer 113.

Preferably, the at least one second processing unit 301, is configured to control, by means of said connection via the cellular network, an automatic pilot 106 operatively connected to said at least a first processing unit 101.

Preferably, in case of network failure with the virtual system of air traffic control, the system provides data for key actions to be performed independently and automatically, with subsequent feed of missed data back to VATC (300) upon successful restoration of a network connection.

Through Dronav App, an App that can be installed on a smartphone or an a tablet and that communicates with the DronAssistant via Bluetooth and/or Wifi modem 125, the operator can connect with the DronAssistant. Before the DronAssistant sends, according to information comprised in the DronATC, the flight plan to VATC, the operator has to indicate, through a telecommunicating interface, the ID of the operator responsible for the flight and the Target Take Off Time (TTOT).

The second processing unit 301 operatively connected to VATCs proceeds accordingly to the following steps:
1) The second processing unit 301 of VATC receives the "Drone ID" from the DronAssistant and checks if it exists in DronATC database or in VATCs servers. It checks if this "Drone ID" has an active subscription and which category it is. If the "Drone ID" does not exist or there is no active subscription associated to it, then DronATC ends and VATC returns "NO-GO".
2) VATC reads the "Drone type" from the DronAssistant and compares it with the one associated to the "Drone ID" in DronATC database. If "Drone type" and "Drone ID" do not match, then DronATC ends and VATC returns a "NO-GO".
3) VATC reads the "Operator ID" and checks on DronATC database if the operator is registered, if the operator has an active subscription on Dronav, if the operator is allowed by the regulator to act as a UAV operator (if this option is available: if required by the regulator), what Dronav Classes the operator is allowed to (if this option is available: if required by the regulator), if the operator is allowed to fly the "Drone type" that VATC just read. If any of these conditions is not fulfilled, then DronATC ends and VATC returns a "NO-GO".
4) DronATC reads the flight plan plan sent by the DronAssistant and checks the "area overflown". It checks if the entire flight plan is in Class G, if the trajectory overflies only areas that are allowed (according to Dronav database), if there are not man-made objects that cross the trajectory (according to Dronav database). If any of these conditions are not fulfilled, then DronATC ends and VATC returns a "NO-GO" command.
5) DronATC reads the flight plan plan sent by the DronAssistant and checks the "communications coverage": if the cellular network covers the entire area that is overflow, or if satellite communication is needed for a part of the flight plan. If the cellular network is not enough, then DronATC gives VATC the instruction to return that a Class -Sat is needed.
6) DronATC reads the flight plan plan sent by the DronAssistant and checks the "maximum altitude". Class A (and Class A-Sat) is not allowed to fly over 400 ft, while Class B and up might be allowed to fly up to 1,200 ft. If "maximum altitude" is higher than the limit set by DronATC for that Class and the "area overflown", then DronATC ends and VATC returns a "NO-GO".
7) VATC reads, according to instruction comprised in DronATC, the flight plan plan sent by the DronAssistant and if the estimated "flight plan duration" is not part of the data package of the flight plan plan, it estimates the "flight plan duration" for the "Drone type" and calculates the Estimated Time of Arrival (ETA) from TTOT. It compares the estimated "flight plan duration" with the "battery autonomy" of the battery 103 detected by said first processing unit 101 by the DronAssistant and it checks if the "battery autonomy" is enough to fly the flight plan. If the margin is small it gives a warning. If the "battery autonomy" is not enough, then DronATC ends and VATC returns a "NO-GO".
8) VATC reads, according to instruction comprised in DronATC, the flight plan plan sent by the DronAssistant and checks the "Dronav Class" that are allowed to fly it (if any). It compares the result with the active "Dronav subscription" associated to the "Drone ID". If the "Dronav subscription" level is not equal or higher than the minimum "Dronav Class" that is required to fly the flight plan, then DronATC ends and VATC returns a "NO-GO".
9) VATC reads, according to instruction comprised in DronATC, the flight plan plan sent by the DronAssistant, checks on DronATC the "weather" and "wind" conditions from TTOT to ETA, and checks if "weather" and "wind" are under the maximum admitted level for the "Drone type". If this condition is not matched, then DronATC ends and VATC returns a "NO-GO".
10) VATC reads, according to instruction comprised in DronATC, the flight plan plan sent by the DronAssistant and it virtually propagates the trajectory from TTOT to ETA + margin minutes, checking if it might interfere with traffic of other drones.
   a) If no traffic conflicts are detected by VATCS with take-off in the window from TTOT inserted by the operator to TTOT + margin minute, then DronATC ends and VATC returns a "STAND-BY" indicating ETOT at the TTOT inserted by the operator. VATC allocates, according to instruction comprised in DronATC, to this drone (reserves airspace) from ETOT to ETA + margin minutes the airspace corresponding to a tube of radius R meters and centered on the trajectory of the flight plan plan.
   b) If traffic conflicts are detected by VATCs with take-off in the window from TTOT inserted by the operator to TTOT + margin minute, then VATC adds, according to instruction comprised in DronATC, one minute to TTOT and it virtually propagates the trajectory from the updated TTOT to ETA. If traffic conflicts are detected again, VATC, according to instruction comprised in DronATC, reiterates the procedure, adding one minute to the latest TTOT of the computational loop. If no traffic conflicts are detected with take-off at the latest TTOT of the computational loop, then DronATC ends and VATC returns "STAND-BY" indicating ETOT at the latest TTOT of the computational loop. VATC allocates, according to instruction comprised in DronATC, to this drone (reserves airspace) from ETOT to ETA + margin minutes the airspace corresponding to a tube of radius R meters and centered on the trajectory of the flight plan plan. When the latest TTOT of the computational loop is equal to ETA, then DronATC ends and VATC returns a "NO-GO".

Fig. 16 and Fig. 17 better describe step 10 and RBS.

Fig. 16 considers the case of two UAVs both with DronAssistant installed and connected to DronATC: UAV A is on the ground, it has submitted a proposed flight plan plan to VATC, and it reached step 10. UAV B might be still on the ground or already airborne, but it had already submitted a proposed flight plan plan that has been accepted by VATC, according to instruction comprised in DronATC.

Preferably, VATC performs, according to instruction comprised in DronATC, the virtual propagation of the trajectory from TTOT to ETA + margin minutes on UAV A, transforming the flight plan plan from 3D (x,y,z) to being 4D (x,y,z,t). The propagation and the estimation of t on each waypoint is made considering wind and weather and the specific performance of the "Drone type".

If at tnest VATC estimates, according to instruction comprised in DronATC, that the minumum safe separation between UAV A and UAV B is not met, defined as the two sphere centered on UAV A and UAV B and of radius W not intersecting, then VATC adds, according to instruction comprised in DronATC, a one minute delay on TTOT of UAV A as described on 10b. In the upper scheme the contitions of mimumum separation are met, as in 10a, while in the lower scheme the contitions of minumum separation are not met, as in 10b.

Fig. 17 considers the case of a UAV with DronAssistant installed and connected to VATC, where an intruder is a flying object without a DronAssistant installed and with an estimated flight plan plan provided by third party API and visible in VATCs: UAV is on the ground, it has submitted a proposed flight plan plan to VATC, and it reached step 10.

VATC, according to instruction comprised in DronATC, performs the virtual propagation of the trajectory from TTOT to ETA + margin minutes on UAV, transforming the flight plan plan from 3D (x,y,z) to being 4D (x,y,z,t). The propagation and the estimation of t on each waypoint is made considering wind and weather and the specific performance of the "Drone type".

If at tnest VATC, according to instruction comprised in DronATC, estimates that the minumum safe separation between UAV and Intruder is not met, defined as the two sphere centered on UAV and intruder and of radius W not intersecting, then VATC, according to instruction comprised in DronATC, adds a one minute delay on TTOT of UAV as described on 10b. In the upper scheme the contitions of mimumum separation are met, as in 10a, while in the lower scheme the contitions of minumum separation are not met, as in 10b.

Before take-off, VATC uploads on the DronAssistants the "emergency landing spots" defined by Dronav and located near the "overflown area".

After a "GO" is given by the VATC, according to instruction comprised in DronATC, when the UAV is turned on and the operator proceeds to take off in FAM, if the GNSS position of the UAV is more than W horizontal meters (for example more than 5 horizontal meters) far from the GNSS take off position that are given to VATC in the proposed flight plan plan, VATC updates itself, according to instruction comprised in DronATC, and returns a "NO-GO" and the DronAssistant locks the UAV specific automatic pilot and not allows the take-off to take place.

### D) How DronATC performs while drone airborne in FAM

If the UAV operator submits a new flight plan plan while the UAV is airborne, VATC runs, according to instruction comprised in DronATC, the same procedure and let the automatic pilot upload and execute the new proposed flight plan plan only if DronATC returns a positive answer and a "GO" to the interrogation Flight plan Plan Request to VATC. In this case the operator does not have to insert TTOT, since the UAV is already airborne, but VATC considers, according to instruction comprised in DronATC, the real time position of the UAV while it is flying the previous flight plan plan that DronATC has accepted. If the proposed new flight plan plan is not accepted by DronATC, the operator can either choose to continue with the previously submitted and accepted flight plan plan, or take the UAV straight to the landing point as indicated in the previously submitted and accepted flight plan plan: it can indicate one of the two options on Dronav App, provided that the smartphone or tablet or laptop has internet connection (either through cell network or sat). If the operator does not select one of the two options through the Dronav App, DronATC proceeds with the previously submitted and accepted flight plan plan and VATC, according to instruction comprised in DronATC, makes the UAV fly the entire flight plan.

Once the UAV is airborne, VATC and DronAssistant exchange data every X seconds (via cellular network or satellite link), with VATC unlocking, according to instruction comprised in DronATC, time-dependent reserved air space tubes of radius R left behind by the UAV, updating time-dependent reserved air space tubes of radius R in front of the UAV, and updating ETA.

As previously described for VBS, VATCs send to the DronAssistant instructions to immediately modify the nominal trajectory previously accepted in the flight plan plan, execute a variation (new GNSS waypoints are provided), and then come back to a further GNSS waypoint part of the original flight plan plan. If this takes place and VATC overrides, according to instruction comprised in DronATC, the drone specific automatic pilot flight plan commands through the DronAssistant, the operator is informed through Dronav App. Example of this VBS procedure might be due to traffic that was not forecast and thus a potential collision situation that has to be anticipated and avoided via VBS, or that allowed third parties (for example the police) in the meantime have created new temporary no flight zones that are part of the area overflown in the previously accepted flight plan plan.

The actual time of take off is saved by VATC, according to instruction comprised in DronATC, as Actual Take Off Time (ATOT).

Fig. 19 and Fig. "VATC GA" better describe how VATC operates for VBS, according to instruction comprised in DronATC.

Fig. 19 considers the case of two UAVs both with DronAssistant installed and connected to VATC: both UAV A and UAV B are airborne. Grey dots represent part of the flight plan plan still in front of the UAV and with uncertainty connected to the actual time associated to it, while black dots are waypoints of the flight plan plan left behind.

The upper scheme shows the situation at t1true, when UAV A is in (xuA1, yuA1, zuA1). At this step VATC, according to instruction comprised in DronATC, performs the virtual propagation of the trajectory from t1true to ETA + margin minutes on UAV A, updating the 4th dimensfreion of the flight plan plan, thus the estimated time on each waypoint part of the flight plan plan still in front of UAV A. The propagation and the estimation of t on each waypoint is made considering wind and weather, the specific performance of the "Drone type", and the difference between t1true and t1est for UAV A. DronATC applies the same method on UAV B.

The central scheme shows the situation at t2true, when UAV A is in (xuA2, yuA2, zuA2). At this step VATC, according to instruction comprised in DronATC, performs the virtual propagation of the trajectory from t2true to ETA + margin minutes on UAV A, updating the 4th dimension of the flight plan plan, thus the estimated time on each waypoint part of the flight plan plan still in front of UAV A. The propagation and the estimation of t on each waypoint is made considering wind and weather, the specific performance of the "Drone type", and the difference between t2true and t2est1. DronATC applies the same method on UAV B.

The lower scheme shows the situation at t3true, when UAV A is in (xuA3, yuA3, zuA3). At this step DronATC performs the virtual propagation of the trajectory from t3true to ETA + margin minutes on UAV A, updating the 4th dimension of the flight plan plan, thus the estimated time on each waypoint part of the flight plan plan still in front of UAV A. The propagation and the estimation of t on each waypoint is made considering wind and weather, the specific performance of the "Drone type", and the difference between t3true and t3est2. DronATC applies the same method on UAV B.

If VATC, according to instruction comprised in DronATC, estimates that the minimum safe separation between UAV A and UAV B is not met, defined as the two spheres centered on UAV A and UAV B and of radius W not intersecting, then DronATC flags a warning. In the lower scheme VATC, according to instruction comprised in DronATC, estimates that the minimum safe separation between UAV A and UAV B will not be maintained. A warning is transformed into an instruction issued by DronATC and executed by a DronAssistant when VATC, according to instruction comprised in DronATC, estimates that the event of failing to maintain safe separation between UAV A and UAV B will take place within Q seconds (for example being Q 30 seconds). In this event, DronATC might comprise different strategies, such as acting on the DronAssistant of both UAV A and UAV B and keeping UAV A and/or UAV B on the same flight plan plan but slowing down or accelerating UAV A and/or UAV B, or modifying the flight plan plan and adding extra waypoints on UAV A or UAV B, and then coming back on the original flight plan plan either on the specific waypoint when the original flight plan plan was left, or directly later on a further waypoint part of the original flight plan plan. One option is chosen by VATC, according to instruction comprised in DronATC, in order to fit within the optional constrains that might have been indicated by the operator on DroNav App when the operator submitted the proposed flight plan plan.

Preferably, if weather or wind conditions are too strong for "Drone type" while UAV A is airborne, VATC decides to issue an instruction to be executed by a DronAssistant, as for example go back to (xuA0, yuA0, zuA0) minimizing the time of flight, or head to the landing point associated to the last waypoint of the flight plan plan minimizing the time of flight, or immediately land pointing the closest "Emergency landing spot" stored on DronAssistant. Fig. 18 considers the case of a UAV with DronAssistant installed and connected to VATC, where an intruder is a flying object without a DronAssistant installed and with an estimated flight plan plan provided by third party API and visible in VATC: both UAV and intruder are airborne. Grey dots represent part of the flight plan plan still in front of the UAV and with uncertainty connected to the actual time associated to it, while black dots are waypoints of the flight plan plan left behind.

The procedure and method to update the 4th dimension of the flight plan plan of UAV is the same as explained in Fig. 19 for UAV A.

VATCS might also require an immediate landing, not only in case of multiple hardware failures (as written above), but also in case for example weather and wind conditions have become not safe for that specific UAV model to fly and weather and wind forecast data did not anticipate it, or if an authority (for example the police or authorized military/civil ATC Service Provider) decides to immediately land the UAV.

As previously described for SBS, if required the DronAssistant might trigger a automated CAA triggered by the sensors part of the DronAssistant. The FLARM sensor and logic triggers the automated CAA only if the risk level of a potential collision is high enough, as defined by Dronav. For SBS, the algorithm to predict the risk level of a potential collision might be based on FLARM, and FLARM might interpret data provided not only by other FLARM devices, but also received through ADS-B In and / or the radar that are part of the DronAssistant.

In case of multiple failures, the DronAssistant might decide to have a controlled crash pointing one of the "emergency landing spot" uploaded on the DronAssistant by VATC, according to instruction comprised in DronATC, before take-off.

### E) How DronATC works in MOM

Here a detailed description of Figure.8 - Figure.9 - Figure.10 is given. It is a flowchart of process that shows how VATC works, according to instruction comprised in DronATC, when interrogated (through DronAssistant installed on board of a UAV and Dronav App) for a take-off procedure in Manual Operations Mode (MOM).

For Manual Operations Mode (MOM) that take place within Visual Line Of Sight (VLOS), the operator has to indicate via Dronav App the ID of the operator, the GNSS position where the operator will stand during the manual UAV operations (called Operator Centered Point, OCP), and the TTOT.

If the operator intends to move during the manual UAV operations, instead of giving OCP, he has to indicate an estimate of the path he intends to follow (we call it Operator Centered Point Path, OCPP), and the Estimated Time of Arrival Last Operator Centered Point, ETALOCP. OCPP is visible and active as an option in Dronav App only if permitted by regulators in that specific country.

VATC sizes, according to instruction comprised in DronATC, a volume that can be spanned by the UAV taking into account the local regulations for manual operations within VLOS (in terms of radius and height from the OCP): we call it Manual Operations Mode Volume (MOMV).

In case of the OCPP, the volume is sized from the first OCP to the last. As shown in the flowchart, DronATC runs all the checks in order to return to the operator a "GO" or "NO GO".

In case of "GO", VATC reserves, according to instruction comprised in DronATC, the MOMV from TTOT and it considered it reserved for a time compatible with the Estimated Battery Autonomy of the "Drone type" (EBA), thus TTOT + EBA.

In case of a "GO" through OCPP, VATC makes, according to instruction comprised in DronATC, an estimation to reserve MOMV centered on the first OCP at TTOT and on the last OCP at ETALOCP.

After a "GO" is given, when the UAV is turned on and the operator proceeds with MOM take off, if the GNSS position of the UAV is outside the MOMV, VATC updates and returns a "NO-GO" and the DronAssistant might lock the UAV specific automatic pilot and not allow the take-off to take place.

In case of OCPP, while the UAV is airborne and the operator is moving, VATC updates, according to instruction comprised in DronATC, the OCP through Dronav App that every Y seconds takes the GNSS position of the operator. The MOMV that is left behind on the OCPP is released by DronATC, and ETALOCP is refined.

Once the UAV has landed, if the operator does not indicate in Dronav App that the manual UAV operations have ended, DronATC considers the operations concluded when the UAV is turned off. Then DronATC releases MOMV.

### F) How DronATC works while drone airborne in PAM

PAM is when during FAM, while the UAV is airborne, the operator suddenly decides to take control of the UAV, and thus switch from FAM to MOM. To do so, the operator has to indicate on Dronav App the request of transition from FAM to MOM. As soon as the request has been submitted through Dronav App, the UAV is put on hold: if it is a multicopter, the UAV stops and keeps that position. If the UAV is a fixed-wing, DronATC checks if it is safe to have the UAV circle around the point where the UAV was when the request to transition from FAM to MOM was submitted through Dronav App (being Hold Radius, HR, the radius of the circle), plus a FAM transition trajectory to move to that circle from the position the UAV was when VATC, according to instruction comprised in DronATC, granted perflight plan. While transitioning from FAM to hold for a multicopter can be instantaneous respect to the time Dronav App submits the request to VATC, it might take more time for DronATC to return an answer when interrogated via Dronav App to transition a fixed-wing from FAM to hold flying in a circle.

When requesting through Dronav App to switch from FAM to MOM, the operator has to indicate OCP or OCPP and ETA. To analyze if MOM can be accepted, DronATC applies the MOM flowchart previously described, but setting TTOT as the time DronATC releases the UAV from the hold condition to MOM.

When DronATC accepts the UAV to switch from FAM to MOM, it releases time-dependent reserved air space tubes of radius R part of the FAM flight plan plan that were in front.

If the request to switch from FAM to MOM is rejected, the UAV keeps flying in FAM following the previously filed and accepted flight plan plan, and Dronav App gives an explanation to the operator.

The operator might want to switch back from MOM to FAM and continue with the previously filed and approved, flight plan plan. To do so, the operator has to request via Dronav App to switch from MOM to FAM, indicating the point on the previously filed, and approved, flight plan plan that will be taken as the first GNSS waypoint in FAM on the old flight plan plan. DronATC runs the FAM flowchart previously described, but setting TTOT as the time VATC releases, according to instruction comprised in DronATC, the UAV from MOM to FAM, and automatically designing a patch trajectory from the current MOM position to the first GNSS waypoint in FAM on the old flight plan plan. If the request to switch from MOM to FAM is rejected, the operator has to keep flying in MOM until the end of the flight plan, and Dronav App gives an explanation to the operator.

### G) How Dronav-Airways are designed and operated

A special case of FAM is when the UAV operator does not submit to VATC a flight plan plan designed through the UAV specific flight plan planner, but when the UAV operator simply asks to VATC to have the clearance for a FAM UAV fly from point A to point B, or to multiple destinations (A - B - A or A - B -C -...). Such a scenario might be of interest when a UAV has to deliver a parcel from point A to point B and land in B, or from point A to point B and then come back to point A, or from point A to point B and then to point C and so on until the end of the flight plan. These flight plans mostly consist in three phases: take off and transition to D-Airway, cruise in D-Airway, and transition from D-Airways to landing location.

As there are (Victor) V-airways and T-routes in low altitudes for General Aviation, and (Jet) J-airways and Q-routes in high altitudes for commercial jets, DroNav defines and designs (DroNav or Delta) D-Airways for small UAVs flying in FAM at low altitudes. Designed by Dronsystems' Dronav in cooperation with the local air traffic regulator, Air Navigation Service Provider (ANSP) and other local shareholders involved, D-Airways are flight corridors composed of multiple GNSS waypoints that can be flown in FAM through Dronav. An airway is a legally defined corridor that connects one specified location to another at a specified altitude, along which an aircraft that meets the requirements of the airway may be flown. Airways are defined with segments within a specific altitude block, corridor width, and between fixed geographic coordinates for satellite navigation systems, or between ground-based radio transmitter navigational aids (navaids), such as VORs (VHF Omni Directional Radio Range), or the intersection of specific radials of two navaids. Historically airways have been designed considering ground infrastructure availability and distribution, more than the area overflown and the risk for the area overflown in case of an airplane crash falling from its flight in the airway. For example, to guide airmail pilots on their delivery routes, the United States Postal Service constructed the first airways in the United States. These airways were between major cities and identified at night by a series of flashing lights and beacons which pilots flew over in sequence to get from one city to the next (as cited in Wikipedia). D-Airways are special airways for UAVs at low altitudes (e.g. up to 500 ft), designed to connect points where traffic between them is considered to be important and recurrent (for example between two cities, or between a warehouse in the countryside and a warehouse at the boundaries of a given city). A unique feature of D-Airways is that they are defined not only to minimize the distance between the two points that they are connecting, but also and mostly to minimize the risk of damages on the ground in case one or more UAVs in the D-Airways happen to crash.

Preferably, D-Airways are defined and fixed (time independent) in a first assumption but might be modified in time and evolve considering the evolution of the area overflown: for example if a new house, or a new road, or a new no-flight zone is built under a part of the D-Airway, meaning that the risk in case of crash is considered too high and thus a part of the D-Airway has to be modified (while the rest of it remains as is).

In a further embodiment, the DronATC contains the instructions regarding a method for identifying D-Airways for a UAV that are continuously updated and modified in order to maintain a risk level in case of crash in the area overflown within a predetermined safety limit.

In this case, when possible, the VATC, according to instruction comprised in DronATC, will continuously evaluate the optimal route to be followed by the UAV in order to minimize the risks on structures or inhabitants in case of accidental crash.

In the followings a description of Figure.11 is given.

The Standard Flight Level (SFL) for D-Airways pointing East (magnetic track 000 to 179 deg) is 250 ft above the ground (SFLE), the Lower Flight Level (LFL) for D-Airways pointing East is 200 ft above the ground (LFLE), and the Upper Flight Level (UFL) for D-Airways pointing East is 300 ft above the ground (UFLE).

The Standard Flight Level (SFL) for D-Airways pointing West (magnetic track 180 to 359 deg) is 400 ft above the ground (SFLW), the Lower Flight Level (LFL) for D-Airways pointing West is 350 ft above the ground (LFLW), and the Upper Flight Level (UFL) for D-Airways pointing West is 450 ft above the ground (UFLW).

In order to request a flight plan plan in FAM through D-Airways, the UAV operator has to choose in Dronav App the option "D-Airways", indicate the take-off GNSS position of the UAV in FAM, TTOT, and the destination GNSS position. Multiple destination positions can be added. The last destination position has to be selected as a landing position, and corresponding ending of the FAM flight plan.

Considering the take-off position A and the first destination B, VATC selects, according to instruction comprised in DronATC, the D-Airway or the sum of multiple D-Airways to be flown to reach the proximity of the first destination B.

Reading the TTOT, VATC estimates, according to instruction comprised in DronATC, the most direct (and safe) transition trajectory to reach the first D-Airway from the take-off position A, taking into account all the existing legal norms included in Dronav. The point of intersection between the transition trajectory and D-Airway is called Arrival Point on D-Airway (APDA).

If traffic is detected at Time of Arrival into D-Airway (TADA), VATC updates, according to instruction comprised in DronATC, ETOT to TTOT + delay. Traffic means that in the time range [TADA - P seconds , TADA + P seconds], where P might be 30 seconds, there is another UAV passing through the vertical section of the D-Airway corridor defined by APDA. If insertion in D-Airway is clear at TADA, DronATC considers the UAV in that D-Airway at TADA, and then flying at the Optimum Cruise Speed (OCS) of that specific UAV, as defined by the manufacturer (if not available, Dronav estimates and assigns an OCS).

If the UAV (UAV2) is faster than the UAV that it has in front in the same D-Airway (UAV1), and DronATC or SBS estimates that UAV2 will reach UAV1 in K seconds (for example in 15 seconds), VATC gives instruction via DronAssistant to UAV2 to move to the UFL, and come back to the SFL when UAV1 is back respect to UAV2 of U meters (for example 50 ft, thus about 15 meters).

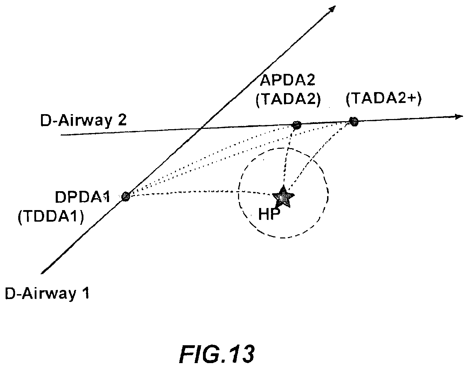

If a UAV3 is faster than UAV2 that is faster than UAV1, and DronATC or SBS estimates that UAV3 will reach UAV1 or UAV2 in K seconds (for example in 15 seconds), and overtaking in UFL is not possible because of predicted collision with UAV2, VATC gives instruction, according to instruction comprised in DronATC, via DronAssistant to UAV3 to move to the LFL, and come back to the SFL when UAV3 has overtaken UAV2 that has overtaken UAV1, when UAV3 is back respect to UAV2 of U meters (for example 50 ft, thus about 15 meters). In the followings a description of Figure.12 and Figure. 13 is given.

Transition from D-Airway 1 to D-Airway 2 does not take place at the intersection of the two, but the UAV leaves D-Airway 1 at some distance before the intersection (for example, 500 meters before the intersection): it is called Departure Point from D-Airway 1 (DPDA1), and it takes time at Time of Departure from D-Airway 1 (TDDA1). APDA2 has same distance as DPDA1 from the intersection between D-Airway 1 and D-Airway 2 (for example, 500 meters). The UAV on D-Airway 1 might be on the SFL, UFL, or LFL, but despite the level of DPDA1, DronATC targets APDA2 at the SFL.

If traffic is detected in APDA2 at TADA2 at SFL, DronATC considers APDA2 at TADA2 at UFL. If traffic is detected in APDA2 at TADA2 also at UFL, DronATC considers APDA2 at TADA2 at LFL. If traffic is detected in APDA2 at TADA2 also at LFL, DronATC considers an intersection in D-Airway 2 at a further point on D-Airway2, APDA2+ at SFL. This procedure continues up to a limit that has been set, where the distance of APDA2+ from APDA2 cannot be bigger than H (for example 5 km).

If the routine reaches the limit and TADA2 is not found when DronATC develops a flight plan plan, DronATC restarts from the beginning and updates ETOT to TTOT + delay.

If the routine reaches the limit and TADA2 is not found while the UAV is already airborne the solution is the Hold Pillar Status (HPS). The UAV leaves D-Airway 1 in DPDA1 and it points a Hold Pillar (HP) as defined by Dronav. If the UAV is a multicoper, it hovers on HP until DronATC finds a TADA2 in APDA2 or APDA2+. If the UAV is a fixed-wing, it flies in a circle of radius S meters (for example 100 meters) centered on HP until DronATC finds a TADA2 in APDA2 or APDA2+. If multiple UAVs have to transition in HPS on the same HP, the first three take the three levels they come from (LFL, SFL, UFL), and eventual other UAVs take a higher flight level if the Airway is pointing East (for example, starting with 50 ft over the previous one, starting 50 ft over UFLE), otherwise the eventual other UAVS take a lower flight level if the Airway is pointing West (for example, starting with 50ft under the previous one, starting 50 ft under LFLW).

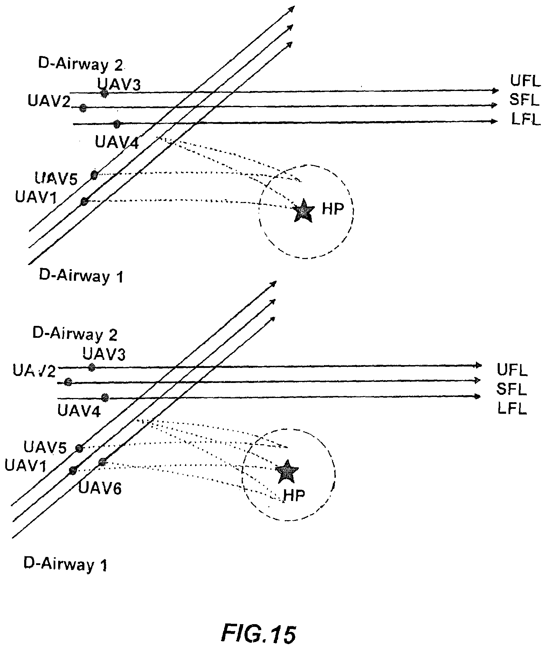

Description of Figure. 14 and Figure. 15 is given.

When two Airways intersect, DronATC acting in VBS might detect that one or more UAVs in D-Airway 1, that will keep flying in D-Airway 1, might collide or come too close with one ore more UAVs in D-Airway 2, that will keep flying in D-Airway 2. DronATC calculates the D-Airway Traffic Index (DATI): the UAVs that are in the D-Airway that has the lower DATI receive instructions from DronATC to perform a correction maneuver. Different scenarios are shown in Figure. 14 and Figure. 15, where D-Airway 1 is assumed to have lower DATI.

If UAV1 is in D-Airway 1 at SFL and UAV2 is in D-Airway 2 at SFL, UAV1 moves to UFL before intersection.

If UAV1 is in D-Airway 1 at SFL, UAV2 is in D-Airway 2 at SFL, and UAV3 is in D-Airway 2 at UFL, UAV1 moves to LFL before intersection.

If UAV1 is in D-Airway 1 at SFL, UAV2 is in D-Airway 2 at SFL, and UAV3 is in D-Airway 2 at UFL , and UAV4 is in D-Airway 2 at LFL, UAV1 goes in HPS, holding or flying in a circle at the same altitude it has (SFL). When DronATC finds a free slot, UAV1 comes back on D-Airway 1 at SFL before the intersection with D-Airway 2.

If multiple UAVs go in HPS, each of them goes in holding position or flies in a circle at the same altitude it has in D-Airway 1. The first UAV that went in HPS is the first one that DronATC considers to be taken back on D-Airway one. When DronATC finds a free slot, all UAVs in HPS come back on D-Airway 1 at SFL before the intersection with D-Airway 2, despite they were at SFL or UFL or LFL while in HPS.

Low-power passive transmitting device - "beacon".

As a means of inclusion of UAVs engaged in non-commercial operations, and/or devices not equipped with DronAssistant or another device compatible with DronATC/VATC protocol, (collectively - "UAV-NCO"), such UAVs shall be equipped with a low-power passive transmitting device - "beacon". The beacon shall emit RF within unlicensed range, at a predetermined power setting. Each ping will carry rolling code information, which could further be processed by VATC, according to instruction comprised in DronATC, once the ping has been picked up and relayed by a compatible sensor ("beacon receiver"), installed either on a UAV engaged in commercial operations, fixed object (e.g. hospitals, airports, secured buildings, restricted, prohibited and danger zones), or mobile terminals.

Each UAV-NCO, at a time of activation, or a purchase, will be registered through a dedicated DronATC or VATC web-based portal. The beacon, which is an integral part of the UAV-NCO circuitry, will have a pre-assigned unique digital ID, which will be linked to the purchaser. During the registration/activation process, the purchaser will be advised about the existing laws and regulations, concerning the use of UAV-NCOs in a National Airspace System, as well as limitations, personal liabilities and responsibilities.

Once a UAV-NCO has been powered up, the UAV-NCO's beacon periodically sends a rolling-code based signal: the signal does not contain the ID of the UAV, or information about the UAV's user. Instead, it sends a small data packet, which could only be processed by DronATC, positively identifying the association of each individual data packet with a unique ID. Upon request from relevant authorities, the ID of the beacon can be matched to the data on the UAV-NCO user, held by VATC.

For privacy protection, beacon receivers' users, unless authorised by bodies responsible, may not have access to the UAV-NCO ID or its User's data: beacon receivers can only (1) confirm the presence of the UAV-NCO within its range, (2) measure signal strength, (3) receive rolling code from the UAV-NCO, (4) through IP tunnel pass information to the VATC, and (5) inform VATC whether UAV-NCO proximity (operations) are within the tolerance limits. In case VATC, according to instruction comprised in DronATC, detects a potentially conflicting situation, an immediate notification is sent to the UAV-NCO user (via SMS and/or e-mail) informing him about a potential breach of UAV-NCO usage rules. Where the information on the breach has been further confirmed, or the UAV-NCO user has not taken avoiding action, the details of the conflict shall be passed to the law enforcement agencies. Beacon receiver is equipped with a small array of aerials and electronic sensors to deduce relative direction of the UAV using signal strength and phase from each aerial. In addition, information from several (3 or more) beacon receivers, each of which is in receipt of the same UAV-NCO signal (not necessarily identical rolling code), can be processed by VATC, according to instruction comprised in DronATC, and the exact location of the UAV-NCO can be identified using autotriangulation method. Certain sites, could be equipped with acoustic sensors, tuned to detect the frequency (noise) emitted by a small propeller - aiding in detecting UAV-NCO with deactivated beacon, or otherwise operating without any RF footprint.

Where a UAV-NCO manufacturer has already equipped the system with a transceiver, which is used to control the UAV-NCO, the beacon can be replaced with a piece of software, which would effectively utilise the transceiver to emulate the beacon, and provide additional features, such as "active geo-fencing" - an instruction, issued by VATC, according to instruction comprised in DronATC, to non-participating UAV-NCOs to withdraw (relocate) from the current location, or temporarily suspend operations.

Information, collected through the beacon receivers, acoustic receivers, DronAssistnat (or simalr)- equipped UAVs, is relayed to DronATC or VATCs. The latters analyze all data sources, according to instruction comprised in DronATC, and with maximum possible accuracy tracks all UAV-NCOs, operating within the range of all the sensors, connected to VATC. That allows the system comprising DronAssistant, DronATC and VATC to create an efficient passage of relevant information to the active National Airspace System users and prevent conflicts.

## Claims

1. An automated system of air traffic control comprising:
• at least one unmanned aerial vehicle (UAV) (100) comprising a module device (1000) including at least a first processing unit (101), at least one sensor (112) operatively connected to said at least one first processing unit (101), at least one signals receiving device (111), at least one first data transfer device (120) for transferring traffic control information to a second data transfer equipment (120b) operatively connected to a virtual system of air traffic control (VATC) (300),
• said virtual system of air traffic control (VATC) (300) comprising at least a second processing unit (301), and the second data transfer equipment (120b), operatively connected to the second processing unit (301), and configured to exchange traffic control information with the at least first data transfer device (120),
• said virtual system of air traffic control (VATC) (300) being arranged to analyze, through the at least second processing unit (301), traffic control information from the at least one unmanned aerial vehicle (UAV) (100), to process a flight plan using said traffic control information and to communicate executable instructions to perform said flight plan to the at least one first processing unit (101),
• said at least first data transfer device (120) being adapted to transfer traffic control information between a plurality of unmanned aerial vehicles (UAVs) wherein said at least one first processing unit (101) is arranged to
o receive and process information obtained by a scanning operation performed by said at least one sensor (112) of any one of said plurality of unmanned aerial vehicles (UAVs),
o transmit said information relating to said scanning to said system of virtual system of air traffic control (VATC) (300)
o receive and process information transferred from said virtual system of air traffic control (VATC) (300) as a result of that scanning operation, to modify the flight plan of said at least one unmanned vehicle aircraft;
∘ modify the flight plan of said at least one unmanned aerial vehicle,
∘ transmit information regarding the modification of said flight plan to said plurality of unmanned aerial vehicles (UAVs), wherein said at least one second processing unit (301) is arranged to:
∘ develop a sequence of information relating to a flight plan and to communicate it to said at least a first processing unit (101), defining, by means of information received and obtained from the scanning operation of said at least one sensor (112), a plan to be taken depending on areas with obstacles stored in a database from which to keep a predetermined distance of separation,
wherein said at least one sensor (112) is arranged to detect a non-cooperative obstacle and said sensor (112) defining a spatial vector of the non-collaborative obstacle to propagate the vector in space-time dimensions and estimate a trajectory of the non-cooperative obstacle in the future at a given time,
wherein said first data transfer device (120) is arranged to upload information regarding the non-cooperative obstacle to a further reachable processing unit (101b) of at least a second unmanned aerial vehicle (UAV) (100) of said plurality of unmanned aerial vehicles (UAVs), included within a predetermined communication range (R), and
wherein said first processing unit (101) is arranged to trigger a request and instructions, sent to the reachable processing units (101b), comprised in said further reachable unmanned aerial vehicles (UAVs), to perform a distributed computing of data regarding the non-collaborative obstacle, in order to apply probabilistic analysis and algorithms to better calculate the propagation of the trajectory of the non-collaborative obstacle forward in time and space.

2. The automated system of air traffic control according to claim 1, wherein said virtual system of air traffic control (VATC) (300) is adapted to process and guarantee the conditions and constraints predetermined for operability in automated air traffic for unmanned aerial vehicles (UAV) by the at least a second processing unit (301) by exchanging information with or receiving information from or about other aircrafts, obstructions, satellite communication systems and cellular, government agencies and regulators .

3. The automated system of air traffic control according to claim 1, wherein said at least one first processing unit (101) is configured to implement a predetermined maneuver to avoid a collision, overwriting commands related to a route or path previously received via said at least one signals receiving device (111) or said at least one data transfer device (120), activated in function updates received via both communication with said control system of the air traffic virtual (VATC) (300) and via direct detection via the at least one sensor (112) allocated into at least one of the plurality of unmanned aerial vehicles (UAVs).

4. The automated system of air traffic control according to claim 3, comprising at least an identification and data flight plan system for said at least one signals receiving device (111) and at least one sensor (112) with the function of barometer operatively connected to said at least one first processing unit (101), configured to detect conditions of possible air collision that activates the control of implementation of the predetermined action to avoid an air collision.

5. The automated system of air traffic control according to claim any of the preceding claims, wherein parameters used to provide a flight plan for take-off for at least one unmanned aerial vehicle (UAV) (100) comprise one or more among the following:
- an identification code (ID) of the at least one unmanned aerial vehicle (UAV) (100)
- an identification code of the at least one type of unmanned aerial vehicle (UAV) (100)
- an identification code of an operator related to the at least one unmanned aerial vehicle (UAV) (100)
- a first listing of areas overflown,
- a second listing of the coverage of the communication,
- a figure for maximum altitude achieved during that flight path,
- duration flight plan flight plan in relation to the autonomy of the battery of a UAV,
- ground flight according to the class of the at least one unmanned aerial vehicle (UAV) (100)
- time climate and wind conditions,
- traffic air depending on the areas covered and their proximity.

6. The automated system of air traffic control according to any of the preceding claims, comprising at least one type of connection via the cellular network and/or satellite with said virtual system of air traffic control (VATC) (300).

7. The automated system of air traffic control according to claim 6, comprising a device for indication of GNSS position and an anti-jammer (113).

8. The automated system of air traffic control according to claim 6, wherein said at least one second processing unit (301), is configured to control, by means of said connection via the cellular network, an automatic pilot (106) operatively connected to said at least a first processing unit (101).

9. The automated system of air traffic control according to claim 1, wherein in case of network failure with the virtual system of air traffic control, the system provides data for key actions to be performed independently and automatically, with subsequent feed of missed data back to VATC (300) upon successful restoration of a network connection.

10. A method for air traffic control of an unmanned aerial vehicle (UAV) (100) comprising an automated system according to any of claims 1 to 9, comprising:
- developing through at least one of said at least one second processing unit (301) a sequence of information relating to a flight plan and communicate it to at least a first processing unit (101), defining, by means of information received and obtained from the scanning operation of at least one sensor (112), a flight plan to be taken depending on areas with obstacles stored in a database from which to keep a predetermined distance of separation, the method further comprising:
- Detecting by said at least one sensor (112) a non-cooperative obstacle, wherein said sensor (112) defines a spatial vector of the non-collaborative obstacle to propagate the vector in space-time dimensions and estimate a trajectory of the non-cooperative obstacle in the future at a given time,
- Uploading, by means of a first transfer device (120) comprised in said unmanned aerial vehicle (UAV) (100), information regarding the non-cooperative obstacle to a further reachable processing unit (101b) of at least a second unmanned aerial vehicle (UAV) (100) of a plurality of unmanned aerial vehicles (UAVs), included within a predetermined communication range (R), and
- Triggering by the first processing unit (101) a request and instructions, sent to the reachable processing units (101b), comprised in other reachable unmanned aerial vehicles (UAVs), to perform a distributed computing of data regarding the non-collaborative obstacle, in order to apply probabilistic analysis and algorithms to better calculate the propagation of the trajectory of the non-collaborative obstacle forward in time and space.

11. A method according to claim 10, comprising the steps of:
- Triggering by the first processing unit (101) a request, sent to the reachable processing units (101b), comprised in the other reachable unmanned aerial vehicles (UAVs), to increase the frequency of data collection by first or second detection sensors (116, 116b) and/or data flight plan exchange between the reachable processing units (101b) and comprised within an area affected by the non-collaborative obstacle.

12. A method according to any of claims 10 to 11 comprising the steps of:
- Identifying D-Airways for said unmanned aerial vehicle (UAV) (100) that are continuously updated and modified by said virtual system of air traffic control (VATC) (300) in order to maintain a risk level in case of crash in the area overflown within a predetermined safety limit.

## Patentansprüche

1. Automatisiertes System zur Flugsicherung, umfassend:
- zumindest ein unbemanntes Luftfahrzeug (UAV) (100) mit einer Modulvorrichtung (1000), die zumindest eine erste Verarbeitungseinheit (101), zumindest einen Sensor (112), der mit der zumindest einen ersten Verarbeitungseinheit (101) wirkverbunden ist, zumindest eine Signalempfangsvorrichtung (111) und zumindest eine erste Datenübertragungsvorrichtung (120) zum Übertragen von Verkehrssteuerungsinformationen an eine zweite Datenübertragungseinrichtung (120b) umfasst, die mit einem virtuellen System der Flugsicherung (VATC) (300) wirkverbunden ist,
- wobei das virtuelle System der Flugsicherung (VATC) (300) zumindest eine zweite Verarbeitungseinheit (301) und die zweite Datenübertragungseinrichtung (120b) aufweist, die mit der zweiten Verarbeitungseinheit (301) wirkverbunden und eingerichtet ist, um Verkehrssteuerungsinformationen mit der zumindest ersten Datenübertragungsvorrichtung (120) auszutauschen,
- wobei das virtuelle System der Flugsicherung (VATC) (300) ausgebildet ist, um durch die zumindest zweite Verarbeitungseinheit (301) Verkehrssteuerungsinformationen von dem zumindest einen unbemannten Luftfahrzeug (UAV) (100) zu analysieren, um einen Flugplan unter Verwendung der Verkehrssteuerungsinformationen zu verarbeiten und ausführbare Anweisungen zur Durchführung des Flugplans an die zumindest eine erste Verarbeitungseinheit (101) zu übermitteln,
- wobei die zumindest erste Datenübertragungsvorrichtung (120) angepasst ist, um Verkehrssteuerungsinformationen zwischen einer Mehrzahl von unbemannten Luftfahrzeugen (UAVs) zu übertragen,
- wobei die zumindest eine erste Verarbeitungseinheit (101) ausgebildet ist,
o um Informationen zu empfangen und zu verarbeiten, die durch einen Scanvorgang erhalten werden, der vom zumindest einen Sensor (112) eines beliebigen der Mehrzahl von unbemannten Luftfahrzeugen (UAVs) durchgeführt wurde,
o um Informationen bezüglich des Scannens an das System des virtuellen Systems der Flugsicherung (VATC) (300) zu übertragen,
o um als Ergebnis dieses Scanvorgangs vom virtuellen System der Flugsicherung (VATC) (300) übertragene Informationen zu empfangen und zu verarbeiten, um den Flugplan des zumindest einen unbemannten Luftfahrzeugs zu ändern;
o um den Flugplan des zumindest einen unbemannten Luftfahrzeugs zu ändern,
o um Informationen bezüglich der Änderung des Flugplans an die Mehrzahl von unbemannten Luftfahrzeugen (UAVs) zu übertragen,
wobei die zumindest eine zweite Verarbeitungseinheit (301) ausgebildet ist:
o um eine Abfolge von Informationen in Bezug auf einen Flugplan zu entwickeln und sie an die zumindest eine erste Verarbeitungseinheit (101) zu übermitteln, um anhand der empfangenen und aus dem Scanvorgang des zumindest einen Sensors (112) erhaltenen Informationen einen Plan zu definieren, der in Abhängigkeit von Bereichen mit Hindernissen erstellt werden soll, die in einer Datenbank gespeichert sind, von denen ein vorbestimmter Abstand einzuhalten ist,
- wobei der zumindest eine Sensor (112) angeordnet ist, um ein nicht kooperatives Hindernis zu erfassen, und der Sensor (112) einen räumlichen Vektor des nicht kooperativen Hindernisses definiert, um den Vektor in Raum-Zeit-Dimensionen auszubreiten und eine Flugbahn des nicht kooperativen Hindernisses in der Zukunft zu einem bestimmten Zeitpunkt abzuschätzen,
- wobei die erste Datenübertragungsvorrichtung (120) angeordnet ist, um Informationen bezüglich des nicht kooperativen Hindernisses an eine weitere erreichbare Verarbeitungseinheit (101b) von zumindest einem zweiten unbemannten Luftfahrzeug (UAV) (100) einer Mehrzahl von unbemannten Luftfahrzeugen (UAVs) hochzuladen, die innerhalb eines vorbestimmten Kommunikationsbereichs (R) enthalten sind, und
- wobei die erste Verarbeitungseinheit (101) angeordnet ist, um eine Anfrage und Anweisungen auszulösen, die an die erreichbaren Verarbeitungseinheiten (101b) gesendet werden, die in den weiteren erreichbaren unbemannten Luftfahrzeugen (UAVs) enthalten sind, um eine verteilte Berechnung von Daten bezüglich des nicht kollaborativen Hindernisses auszuführen, um probabilistische Analysen und Algorithmen anzuwenden, um die Ausbreitung der Flugbahn des nicht kollaborativen Hindernisses in Zeit und Raum besser zu berechnen.

2. Automatisiertes System zur Flugsicherung nach Anspruch 1, wobei das virtuelle System der Flugsicherung (VATC) (300) angepasst ist, um die Bedingungen und Einschränkungen, die für eine Funktionsfähigkeit im automatisierten Flugverkehr für unbemannte Luftfahrzeuge (UAV) vorgegeben sind, durch die zumindest eine zweite Verarbeitungseinheit (301) durch den Austausch von Informationen mit oder den Empfang von Informationen von oder über andere Flugzeuge, Hindernisse, Satellitenkommunikationssysteme und Mobilfunk, Regierungsbehörden und Regulierungsbehörden zu verarbeiten und zu gewährleisten.

3. Automatisiertes System zur Flugsicherung nach Anspruch 1, wobei die zumindest eine erste Verarbeitungseinheit (101) eingerichtet ist, um ein vorgegebenes Manöver zur Vermeidung einer Kollision durchzuführen und Befehle zu überschreiben, die sich auf eine Route oder einen Weg beziehen, die zuvor über die zumindest eine Signalempfangsvorrichtung (111) oder die zumindest eine Datenübertragungsvorrichtung (120) empfangen wurden, die in Funktionsaktualisierungen aktiviert werden, die sowohl über die Kommunikation mit dem Steuersystem des virtuellen Systems der Flugsicherung (VATC) (300) als auch über die direkte Erfassung über den zumindest einen Sensor (112) empfangen werden, der zumindest einem der Mehrzahl von unbemannten Luftfahrzeugen (UAVs) zugeordnet ist.

4. Automatisiertes System zur Flugsicherung nach Anspruch 3, das zumindest ein Identifizierungs- und Datenflugplansystem für die zumindest eine Signalempfangsvorrichtung (111) und zumindest einen Sensor (112) mit der Funktion eines Barometers aufweist, der mit der zumindest einen ersten Verarbeitungseinheit (101) wirkverbunden ist, die eingerichtet sind, um Bedingungen einer möglichen Luftkollision zu erfassen, die die Steuerung der Durchführung der vorbestimmten Aktion zur Vermeidung einer Luftkollision aktiviert.

5. Automatisiertes System zur Flugsicherung nach einem der vorhergehenden Ansprüche, wobei die Parameter, die verwendet werden, um einen Flugplan für den Start für zumindest ein unbemanntes Luftfahrzeug (UAV) (100) vorzusehen, eines oder mehrere der folgenden Elemente aufweisen:
- einen Identifikationscode (ID) des zumindest einen unbemannten Luftfahrzeugs (UAV) (100),
- einen Identifikationscode des zumindest einen Typs des unbemannten Luftfahrzeugs (UAV) (100),
- einen Identifikationscode eines Betreibers, der mit dem zumindest einen unbemannten Luftfahrzeug (UAV) (100) verbunden ist,
- eine erste Auflistung der überflogenen Gebiete,
- eine zweite Auflistung der Reichweite der Kommunikation,
- eine Zahl für die auf diesem Flugweg erreichte maximale Höhe,
- einen Flugplan für die Dauer des Fluges in Abhängigkeit von der Autonomie der Batterie eines UAVs,
- einen Bodenflug entsprechend der Klasse des zumindest einen unbemannten Luftfahrzeugs (UAV) (100),
- Zeit, Klima und Windbedingungen,
- einen Luftverkehr in Abhängigkeit von den umfassenden Gebieten und deren Nähe.

6. Automatisiertes System zur Flugsicherung nach einem der vorhergehenden Ansprüche, das zumindest eine Verbindungsart über das Mobilfunknetz und/oder den Satelliten mit dem virtuellen System der Flugsicherung (VATC) (300) aufweist.

7. Automatisiertes System zur Flugsicherung nach Anspruch 6, das eine Vorrichtung zur Anzeige der GNSS-Position und einen Störungsschutz (113) aufweist.

8. Automatisiertes System zur Flugsicherung nach Anspruch 6, wobei die zumindest eine zweite Verarbeitungseinheit (301) eingerichtet ist, um mittels der Verbindung über das zellulare Netzwerk einen Autopiloten (106) zu steuern, der mit der zumindest einen ersten Verarbeitungseinheit (101) wirkverbunden ist.

9. Automatisiertes System zur Flugsicherung nach Anspruch 1, wobei im Falle eines Netzwerkausfalls mit dem virtuellen System der Flugsicherung das System Daten für unabhängig und automatisch durchzuführende Schlüsselaktionen mit anschlie-ßender Rückführung verpasster Daten an das VATC (300) nach erfolgreicher Wiederherstellung einer Netzverbindung vorsieht.

10. Verfahren zur Flugsicherung eines unbemannten Luftfahrzeugs (UAV) (100) mit einem automatisierten System nach einem der Ansprüche 1 bis 9 aufweist, umfassend:
- Entwickeln einer Folge von Informationen bezüglich eines Flugplans durch zumindest eine der zumindest einen zweiten Verarbeitungseinheit (301) und Übermitteln dieser an zumindest eine erste Verarbeitungseinheit (101),
- Definieren anhand von Informationen, die vom Scanvorgang von zumindest einem Sensor (112) empfangen und erhalten werden, eines durchzuführenden Flugplans in Abhängigkeit von Bereichen mit Hindernissen, die in einer Datenbank gespeichert sind, von denen ein vorbestimmter Abstand einzuhalten ist, wobei das Verfahren ferner aufweist:
- Erfassen eines nicht kooperativen Hindernisses durch den zumindest einen Sensor (112), wobei der Sensor (112) einen räumlichen Vektor des nicht kollaborativen Hindernisses definiert, um den Vektor in Raum-Zeit-Dimensionen auszubreiten und eine Flugbahn des nicht kooperativen Hindernisses in der Zukunft zu einem bestimmten Zeitpunkt abzuschätzen,
- Hochladen von Informationen über das nicht kooperative Hindernis mittels einer ersten Übertragungsvorrichtung (120), die im unbemannten Luftfahrzeug (UAV) (100) enthalten ist, zu einer weiteren erreichbaren Verarbeitungseinheit (101b) von zumindest einem zweiten unbemannten Luftfahrzeug (UAV) (100) einer Mehrzahl von unbemannten Luftfahrzeugen (UAVs), die innerhalb einer vorgegebenen Kommunikationsreichweite (R) liegen, und
- Auslösen einer Anfrage und von Anweisungen durch die erste Verarbeitungseinheit (101), die an die erreichbaren Verarbeitungseinheiten (101b) gesendet werden, die in anderen erreichbaren unbemannten Luftfahrzeugen (UAVs) enthalten sind, um eine verteilte Berechnung von Daten bezüglich des nicht kollaborativen Hindernisses auszuführen, um probabilistische Analysen und Algorithmen anzuwenden, um die Ausbreitung der Flugbahn des nicht kollaborativen Hindernisses in Zeit und Raum besser zu berechnen.

11. Verfahren nach Anspruch 10, das die Schritte aufweist:
- Auslösen einer Anfrage durch die erste Verarbeitungseinheit (101), die an die erreichbaren Verarbeitungseinheiten (101b) gesendet wird, die in den anderen erreichbaren unbemannten Luftfahrzeugen (UAVs) enthalten sind, um die Häufigkeit der Datenerfassung durch die ersten oder zweiten Erfassungssensoren (116, 116b) und/oder den Datenflugplanaustausch zwischen den erreichbaren Verarbeitungseinheiten (101b) und innerhalb eines vom nicht kollaborativen Hindernis betroffenen Bereichs zu erhöhen.

12. Verfahren nach einem der Ansprüche 10 bis 11, das die Schritte aufweist:
- Identifizieren von D-Airways für das unbemannte Luftfahrzeug (UAV) (100), die durch das virtuelle System der Flugsicherung (VATC) (300) kontinuierlich aktualisiert und geändert werden, um ein Risikoniveau im Falle eines Absturzes im überflogenen Bereich innerhalb einer vorgegebenen Sicherheitsgrenze aufrechtzuerhalten.

## Revendications

1. Système automatisé de contrôle de la circulation aérienne comprenant :
• au moins un véhicule aérien sans pilote (UAV) (100) comprenant un dispositif de module (1000) incluant au moins une première unité de traitement (101), au moins un capteur (112) relié fonctionnellement à ladite au moins une première unité de traitement (101), au moins un dispositif de réception de signaux (111), au moins un premier dispositif de transfert de données (120) pour transférer des informations de contrôle de la circulation à un second équipement de transfert de données (120b) relié fonctionnellement à un système virtuel de contrôle de la circulation aérienne (VATC) (300),
• ledit système virtuel de contrôle de la circulation aérienne (VATC) (300) comprenant au moins une seconde unité de traitement (301), et le second équipement de transfert de données (120b), relié fonctionnellement à la seconde unité de traitement (301), et configuré pour échanger des informations de contrôle de la circulation avec l'au moins un premier dispositif de transfert de données (120),
• ledit système virtuel de contrôle de la circulation aérienne (VATC) (300) étant agencé pour analyser, par l'intermédiaire de l'au moins une seconde unité de traitement (301), des informations de contrôle de la circulation provenant de l'au moins un véhicule aérien sans pilote (UAV) (100), pour traiter un plan de vol en utilisant lesdites informations de contrôle de la circulation et pour communiquer des instructions exécutables pour réaliser ledit plan de vol à l'au moins une première unité de traitement (101),
• ledit au moins un premier dispositif de transfert de données (120) étant apte à transférer des informations de contrôle de la circulation entre une pluralité de véhicules aériens sans pilote (UAV),
dans lequel ladite au moins une première unité de traitement (101) est agencée pour
∘ recevoir et traiter des informations obtenues par une opération de balayage réalisée par ledit au moins un capteur (112) de l'un quelconque parmi ladite pluralité de véhicules aériens sans pilote (UAV),
o transmettre lesdites informations relatives audit balayage audit système virtuel de contrôle de la circulation aérienne (VATC) (300),
∘ recevoir et traiter des informations transférées depuis ledit système virtuel de contrôle de la circulation aérienne (VATC) (300) en conséquence de cette opération de balayage, pour modifier le plan de vol dudit au moins un véhicule aérien sans pilote ;
o modifier le plan de vol dudit au moins un véhicule aérien sans pilote,
o transmettre des informations relatives à la modification dudit plan de vol à ladite pluralité de véhicules aériens sans pilote (UAV),
dans lequel ladite au moins une seconde unité de traitement (301) est agencée pour :
o développer une séquence d'informations relatives à un plan de vol et la communiquer à ladite au moins une première unité de traitement (101), définir, au moyen d'informations reçues et obtenues depuis l'opération de balayage dudit au moins un capteur (112), un plan de vol à suivre en fonction de zones avec des obstacles stockés dans une base de données par rapport auxquels une distance prédéterminée de séparation doit être maintenue,
dans lequel ledit au moins un capteur (112) est agencé pour détecter un obstacle non coopératif et ledit capteur (112) définissant un vecteur spatial de l'obstacle non collaboratif pour propager le vecteur dans des dimensions espace-temps et estimer une trajectoire de l'obstacle non coopératif à l'avenir à un temps donné,
dans lequel ledit premier dispositif de transfert de données (120) est agencé pour charger des informations relatives à l'obstacle non coopératif dans une autre unité de traitement joignable (101b) d'au moins un second véhicule aérien sans pilote (UAV) (100) parmi ladite pluralité de véhicules aériens sans pilote (UAV), inclus à une portée de communication prédéterminée (R), et dans lequel ladite première unité de traitement (101) est agencée pour déclencher une demande et des instructions, envoyées aux unités de traitement (1 0 1b) j oignables, comprises dans lesdits autres véhicules aériens sans pilote (UAV) joignables, pour réaliser un calcul distribué de données relatives à l'obstacle non collaboratif, afin d'appliquer une analyse probabiliste et des algorithmes probabilistes pour mieux calculer la propagation de la trajectoire de l'obstacle non collaboratif à l'avance dans le temps et l'espace.

2. Système automatisé de contrôle de la circulation aérienne selon la revendication 1, dans lequel ledit système virtuel de contrôle de la circulation aérienne (VATC) (300) est apte à traiter et garantir les conditions et contraintes prédéterminées pour une opérabilité d'une circulation aérienne automatisée de véhicules aériens sans pilote (UAV) par l'au moins une seconde unité de traitement (301) par l'échange d'informations avec ou la réception d'informations depuis ou au sujet d'autres aéronefs, obstructions, systèmes de communication satellitaires et cellulaires, organismes gouvernementaux et régulateurs.

3. Système automatisé de contrôle de la circulation aérienne selon la revendication 1, dans lequel ladite au moins une première unité de traitement (101) est configurée pour mettre en oeuvre une manoeuvre prédéterminée pour éviter une collision, réécrire des commandes relatives à un itinéraire ou un trajet précédemment reçues via ledit au moins un dispositif de réception de signaux (111) ou ledit au moins un dispositif de transfert de données (120), activer des mises à jour de fonctions reçues à la fois via une communication avec ledit système virtuel de contrôle de la circulation aérienne (VATC) (300) et via une détection directe par l'au moins un capteur (112) alloué à au moins l'un parmi la pluralité de véhicules aériens sans pilote (UAV).

4. Système automatisé de contrôle de la circulation aérienne selon la revendication 3, comprenant au moins un système d'identification et de données de plan de vol pour ledit au moins un dispositif de réception de signaux (111) et au moins un capteur (112) avec une fonction de baromètre relié fonctionnellement à ladite au moins une première unité de traitement (101), configuré pour détecter des conditions de collision aérienne possible qui activent la commande de la mise en oeuvre de l'action prédéterminée pour éviter une collision aérienne.

5. Système automatisé de contrôle de la circulation aérienne selon l'une quelconque des revendications précédentes, dans lequel des paramètres utilisés pour fournir un plan de vol pour le décollage d'au moins un véhicule aérien sans pilote (UAV) (100) comprennent un ou plusieurs parmi ce qui suit :
- un code d'identification (ID) de l'au moins un véhicule aérien sans pilote (UAV) (100),
- un code d'identification d'un type de l'au moins un véhicule aérien sans pilote (UAV) (100),
- un code d'identification d'un opérateur lié à l'au moins un véhicule aérien sans pilote (UAV) (100),
- une première liste de zones survolées,
- une seconde liste de la couverture de la communication,
- une valeur numérique d'une altitude maximale atteinte au cours du plan de vol,
- une durée du plan de vol par rapport à l'autonomie de la batterie d'un UAV,
- un vol au sol en fonction de la catégorie de l'au moins un véhicule aérien sans pilote (UAV) (100),
- des conditions climatiques et de vent courantes,
- une circulation aérienne en fonction des zones couvertes et de leur proximité.

6. Système automatisé de contrôle de la circulation aérienne selon l'une quelconque des revendications précédentes, comprenant au moins un type de connexion via le réseau cellulaire et/ou satellitaire avec ledit système virtuel de contrôle de la circulation aérienne (VATC) (300).

7. Système automatisé de contrôle de la circulation aérienne selon la revendication 6, comprenant un dispositif d'indication de position GNSS et un anti-brouilleur (113).

8. Système automatisé de contrôle de la circulation aérienne selon la revendication 6, dans lequel ladite au moins une seconde unité de traitement (301) est configurée pour commander, au moyen de ladite connexion via le réseau cellulaire, un pilote automatique (106) relié fonctionnellement à ladite au moins une première unité de traitement (101).

9. Système automatisé de contrôle de la circulation aérienne selon la revendication 1, dans lequel, en cas de panne de réseau avec le système virtuel de contrôle de la circulation aérienne, le système fournit des données pour des actions essentielles à réaliser indépendamment et automatiquement, avec une distribution ultérieure des données manquées au VATC (300) au rétablissement réussi d'une connexion de réseau.

10. Procédé de contrôle de la circulation aérienne d'un véhicule aérien sans pilote (UAV) (100) comprenant un système automatisé selon l'une quelconque des revendications 1 à 9, comprenant :
- le développement, par l'intermédiaire d'au moins une parmi ladite au moins une seconde unité de traitement (301), d'une séquence d'informations relatives à un plan de vol et la communication de celle-ci à au moins une première unité de traitement (101), la définition, au moyen d'informations reçues et obtenues depuis l'opération de balayage dudit au moins un capteur (112), d'un plan de vol à suivre en fonction de zones avec des obstacles stockés dans une base de données par rapport auxquels une distance prédéterminée de séparation doit être maintenue,
le procédé comprenant en outre :
- la détection, par ledit au moins un capteur (112), d'un obstacle non coopératif, dans lequel ledit capteur (112) définit un vecteur spatial de l'obstacle non collaboratif pour propager le vecteur dans des dimensions espace-temps et estimer une trajectoire de l'obstacle non coopératif à l'avenir à un temps donné,
- le chargement, au moyen d'un premier dispositif de transfert (120) compris dans ledit véhicule aérien sans pilote (UAV) (100), d'informations relatives à l'obstacle non coopératif dans une autre unité de traitement j oignable (101b) d'au moins un second véhicule aérien sans pilote (UAV) (100) parmi une pluralité de véhicules aériens sans pilote (UAV), inclus à une portée de communication prédéterminée (R), et
- le déclenchement, par la première unité de traitement (101), d'une demande et d'instructions, envoyées aux unités de traitement (101b) joignables, comprises dans d'autres véhicules aériens sans pilote (UAV) joignables, pour réaliser un calcul distribué de données relatives à l'obstacle non collaboratif, afin d'appliquer une analyse probabiliste et des algorithmes probabilistes pour mieux calculer la propagation de la trajectoire de l'obstacle non collaboratif à l'avance dans le temps et l'espace.

11. Procédé selon la revendication 10, comprenant les étapes suivantes :
- le déclenchement, par la première unité de traitement (101), d'une demande envoyée aux unités de traitement (101b) joignables, comprises dans les autres véhicules aériens sans pilote (UAV) joignables, pour accroître la fréquence de collecte de données par un premier ou second capteur de détection (116, 116b) et/ou d'échange de données de plan de vol entre les unités de traitement (101b) joignables, et comprises à l'intérieur d'une zone affectée par l'obstacle non collaboratif.

12. Procédé selon la revendication 10 ou 11, comprenant les étapes suivantes :
- l'identification de D-Airways pour ledit véhicule aérien sans pilote (UAV) (100) qui sont continuellement mises à jour et modifiées par ledit système virtuel de contrôle de la circulation aérienne (VATC) (300) afin de maintenir un niveau de risque en cas d'accident dans la zone survolée à l'intérieur d'une limite de sécurité prédéterminée.
